(19) Europäisches Patentamt
European Patent Office
Office européen des brevets

(11) **EP 4 410 715 A1**

(12) **EUROPÄISCHE PATENTANMELDUNG**

(43) Veröffentlichungstag:
**07.08.2024 Patentblatt 2024/32**

(21) Anmeldenummer: **24154861.9**

(22) Anmeldetag: **30.01.2024**

(51) Internationale Patentklassifikation (IPC):
**B65G 17/20** (2006.01) **B65G 19/02** (2006.01)

(52) Gemeinsame Patentklassifikation (CPC):
**B65G 17/20; B65G 19/025;** B65G 2201/0229

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **03.02.2023 CH 972023**

(71) Anmelder: **FERAG AG**
**8340 Hinwil (CH)**

(72) Erfinder: **Fenile, Roberto**
**8623 Wetzikon (CH)**

(74) Vertreter: **IPrime Rentsch Kaelin AG**
**Hirschengraben 1**
**8001 Zürich (CH)**

(54) **ABSTANDSOPTIMIERUNGSVORRICHTUNG FÜR EIN FÖRDERSYSTEM, VERFAH-REN ZUR FÖRDERUNG VON HÄNGETRANSPORTELEMENTEN UND HÄNGEFÖRDERSYSTEM**

(57) Eine Abstandsoptimierungsvorrichtung (20, 20a-20e) für Hängetransportelemente (23, 23a-23e), insbesondere eines Hängeförderers (22), umfasst mindestens eine Sensoreinrichtung (21), mindestens ein Abstandanpassungselement (27), und mindestens eine Steuerungseinheit (39). Die mindestens eine Steuerungseinheit (39) ist ausgebildet, das mindestens eine Abstandanpassungselement (27) auf Basis von Messungen der mindestens einen Sensoreinrichtung (21) des freien Raums zwischen zwei benachbarten Hängetransportelementen (23, 23a-23e) zu steuern, so dass der Abstand zwischen den benachbarten Hängetransportelementen (23, 23a-23e) anpassbar und parametrisiert eingestellt wird.

Fig. 3

EP 4 410 715 A1

**Beschreibung**

**Gebiet der Technik**

Die vorliegende Erfindung betrifft eine Abstandsoptimierungsvorrichtung, ein Verfahren zur Förderung von Hängetransportelementen und ein Hängefördersystem für Hängetransportelemente.

**Technologischer Hintergrund**

In der modernen dynamischen Intralogistik werden Fördersystemen, Produktionsstätten, Warenlagern, Kommissionierungssystemen und anderen Logistikanlagen zunehmend komplexe Betriebsanforderungen zugewiesen, sodass eine komplexe Anlagentechnik zur Bewältigung dieser Anforderungen meist unumgänglich ist. Um den steigenden Verarbeitungskapazitäten nachzukommen und den Betriebskostensteigerungen entgegenzuwirken, werden die Anlagen zudem mit hohen Fördergeschwindigkeiten betrieben. Jedoch sind die hohen Fördergeschwindigkeiten mit einer weiteren Problematik verbunden, nämlich mit Förderinstabilitäten und mit höherer Kollisionsgefahr der zu fördernden Güter bzw. Waren und deren Transporteinheiten, und in der Folge mit grösserer Störungsanfälligkeit der Aufträge, Kapazitätsüberlastungen, Verzögerungen oder gar einem Stillstand der Anlage.

Von den bewährten Fördersystemen haben sich insbesondere Hängefördersysteme als ein effizientes Mittel für den Transport, die Zwischenpufferung, aber auch die langfristige Lagerung verschiedener Arten von Waren erwiesen. Unter Waren werden verschiedenste Güter verstanden, welche im Rahmen der Kommissionierung für Versandanlagen oder auch der industriellen Fertigung in der Produktion bereitgestellt werden. Regelmässig wird dabei auch von Stückgut gesprochen, wobei dieses einzeln oder in Zusammenstellungen gefördert wird. Bei Hängefördersystemen werden die Waren entweder auf geeignete Weise direkt an einzelnen Förderelementen eines Fördersystems angehängt, oder in entsprechende Transportelemente, wie insbesondere Hängetransportelemente, eingebracht, die wiederum hängend an den Förderelementen angeordnet sind. Hängefördersysteme können als Transportkettenanlagen realisiert sein, bei welchen eine Vielzahl von Förderelementen insbesondere als Glieder einer Kette, als Mitnehmer oder kettengeförderte Laufelemente ausgebildet sind, die entlang einer Förderstrecke bewegt werden. Im Rahmen der Erfindung können aber auch andere, z.B. schienengeführte, aktive (angetriebene) oder passive (schwerkraftfördernde), Fördersysteme mit flexibel beabstandeten oder getakteten Förderelementen eingesetzt werden.

Neben dem klassischen Einsatz in Logistikanlagen sind auch weitere Einsatzmöglichkeiten gegeben, und zwar wo die Alternative in Form von menschlicher Arbeit nicht oder nur sehr schwer umsetzbar ist, wie beispielsweise der Transport von Gegenständen in gefährlichen Umgebungen oder bei extremen Temperaturen. Beispiele für solche Betriebe sind Raffinerien oder chemische Verarbeitungsanlagen. Zu diesem Zweck kann das Hängefördersystem, einschliesslich der Transportelemente und übriger Komponenten, erfindungsgemäss feuerfest und alternativ oder ergänzend korrosionsbeständig ausgeführt werden. Gerade bei solchen Einsatzgebieten ist ein möglichst störungs- und kollisionsfreier Betrieb von Bedeutung.

In Hängefördersystemen, die mit hohen Fördergeschwindigkeiten arbeiten, werden die Hängetransportelemente in der Regel grossen Belastungen ausgesetzt, die sich aus der komplexen Geometrie der Anlage und der Systemleistung ergeben. Moderne Anlagen weisen aufgrund ihrer Betriebsanforderungen regelmässig komplexe logistikoptimierte Geometrien auf, mit diversen vertikalen und horizontalen Förderebenen sowie einem System von kurvenreichen Förderbahnen. Die Hängetransportelemente müssen daher öfter während der Förderung oder einer Einlagerung bzw. Pufferung angehalten, um Kurven geführt und beschleunigt oder abgebremst werden. Dies führt dazu, dass die Hängetransportelemente bezüglich ihrer Ruheposition geschwenkt werden, in Schwingung oder andere Eigenbewegungen geraten und mit anderen Hängetransportelementen kollidieren können. Das führt bei Hängefördersystemen zu einer ganz besonderen Problematik im Vergleich zu anderen Fördersystemen. Je nach eingesetzten Hängetransportelementen, namentlich bei Verwendung flexibler Hängetransportelemente, können diese aufgrund der Förderung (gegenseitiges Verschieben der Waren innerhalb des Transportelements aufgrund einwirkender Bewegungskräfte) oder gegebener Bearbeitungsschritte (z.B. sequenzielles Befüllen oder Entnahme von Produkten) ihre äussere und innere Geometrie bzw. Ausdehnung, insbesondere deren Volumen, verändern.

Das Grundkonzept eines Hängeförderers besteht aus einem System von Anlageaufbau, Steuerung, Bändern, Ketten oder Schienen, Weichen und Rollen, sowie Fördereinheiten, die mittels Antrieben oder schwerkraftbewegt gefördert sind. Der Hängeförderer ist über Boden (oft auch über Kopf eines Arbeitsbereichs) angeordnet, wobei Güter von einem Punkt zum anderen transportiert werden. Diese Art von Förderanlagen können auch zum Puffern oder Lagern von Waren dienen. Konkret kommen solche beispielsweise für die Automatisierung der Verpackung und des Versands von Produkten zur Anwendung. Darüber hinaus ermöglicht dies eine effizientere Raumnutzung sowie die Möglichkeit, Kommissionen in Versandsystemen bei Bedarf schnell bereitzustellen und zu organisieren.

Aufgrund dieser Anforderungen und der vorhandenen Bewegungsdynamik können die zu fördernden Waren, die Transportelemente oder sogar die Anlage selbst beeinträchtigt oder beschädigt werden. Ohne Berücksichtigung dieser Effekte ist ein störungsfreier Betrieb bei hohen Geschwindigkeiten und grosser Förderleistung nicht gewährleistet.

Aus dem Stand der Technik ist die EP 3543181 A1 der hiesigen Anmelderin bekannt. Es wird dort eine Fördervorrichtung zum Eintakten von Transporteinheiten beschrieben, mit einer Mehrzahl von Transporteinheiten und einem Takt- bzw. umlaufenden Förderer zum Fördern der Transporteinheiten. Der dortige Taktförderer umfasst eine Mehrzahl von Mitnehmern, welche jeweils mit einer Transporteinheit lösbar verbindbar sind, sowie mindestens eine Förderstrecke und eine Weichenvorrichtung. Die Förderstrecken sind an einer Eintaktstelle an den Taktförderer angeschlossen, welche dazu eingerichtet ist, die Transporteinheiten an der Eintaktstelle in den Taktförderer einzutakten. Es sind verschiedene Ermittlungsvorrichtungen im Bereich der Förderstrecken vorgesehen, welche die Ausdehnungen der Transporteinheiten ermitteln und mittels einer Steuerung bzw. gesteuerten Vereinzelungsvorrichtungen darauf basierend die gewünschten Förderabstände der Transporteinheiten einstellen. Eine Optimierung der Förderabstände ist hier nur indirekt über die Ermittlung der Ausdehnung der Transporteinheiten möglich.

Weiterhin ist aus dem Stand der Technik die DE 102019215304 B3 bekannt. Dieses Dokument offenbart eine Vorrichtung und ein Verfahren zum vereinzelten Aufgeben von

Hängefördergut in eine Fördertechnik einer Hängeförderanlage. Der Transportabstand der Hängefördergüter auf der Fördertechnik ist veränderlich festlegbar, wobei eine Aufgabeeinheit mit Stoppelementen zum Stoppen der Hängefördergüter vorgesehen ist, sodass eine Erfassungseinheit die Dicke der einzelnen Hängefördergüter erfassen kann. Der Transportabstand der Hängefördergüter kann anschliessend unter Berücksichtigung der Dicke der einzelnen Hängefördergüter mittels des Stoppelements der Aufgabeeinheit angepasst werden. Die Dicke der Hängefördergüter wird gemäss diesem Dokument nach dem Stoppen der Hängefördergüter erfasst. Andere Parameter der Anlage und der Hängetransportelemente bleiben unberücksichtigt und die Konstruktion ist nur für lineare, sehr einfache Förderstrecken einsetzbar. So wird eine Neigung, die Winkelstellung der Hängetransportelemente, ein gekrümmter Verlauf der Förderbahn oder ein Schwingen des Hängeförderguts während des Förderns gar nicht berücksichtigt. Auch hier kann der Förderabstand bestenfalls indirekt (und fehlerbehaftet) über eine punktuelle Dickenmessung erfolgen. Eine optimierte Förderdichte kann daher nicht erzielt werden, da die Dickenmessung der Hängetransportelementen nicht ausreichend ist, um dynamische und komplexere Betriebsbedingungen zu erfüllen und auch nicht-lineare Anlagengeometrien mit einzubeziehen. Bei dieser Konstruktion bleiben zudem auch Bewegungstoleranzen der Hängefördergüter unberücksichtigt, sodass dies nicht den Anforderungen moderner komplexer Hängefördersysteme entspricht.

Auch bei einer weiteren vorbekannten Lösung gemäss EP 2899144 A1, welche eine Fördervorrichtung zum automatisierten Fördern von Einzelwaren entlang einer als Hängefördervorrichtung ausgebildeten Förderrichtung vorsieht und jeweils Adapter-Identifikationsmittel an Adaptern zum Aufnehmen der Einzelwaren und Einzelwaren-Transponder an den Einzelwaren besitzt, wobei eine Transponderlese-Einheit für das Einlesen der Daten des Transponders und des Identifikationsmittels mit einer Steuerungseinheit in Signalverbindung stehen, und diese Daten verknüpfen werden, sind sowohl die Sensorik als auch die Steuerung nicht hinreichend, um einen sicheren Betrieb einer komplexen Anlage und eine optimierte Förderdichte zu bewirken.

Schliesslich zeigt eine weitere Anmeldung der hiesigen Anmelderin, CH 714004 A1, eine Kommissionierungsanlage zum Kommissionieren von unterschiedlichen, insbesondere hängend transportierbaren Waren, die wenigstens eine Aufgabestation mit einer Mehrzahl von parallel angeordneten Aufgabeplätzen zur Aufgabe der zu kommissionierenden Waren in die Kommissionierungsanlage, sowie wenigstens eine Versandstation mit einer Mehrzahl von parallel angeordneten Versandplätzen zur Abgabe der kommissionierten Waren an den Versand umfasst. Diese Erfindung zeigt eine komplexere Anlagentechnik zur Kommissionierung der Waren, wobei zwischen der Aufgabestation und der Versandstation wenigstens ein Zwischenspeicher vorgesehen ist. Ein hoher Durchsatz bei gleichzeitig vermindertem apparativen Aufwand wird dadurch erreicht, dass der wenigstens eine Zwischenspeicher einen dynamischen Speicher zur Zwischenspeicherung der für die Kommissionierung bereitgestellten Waren und einen dem dynamischen Speicher nachgeschalteten Abrufspeicher zum Speichern von aus dem dynamischen Speicher ausgespeicherten und dabei vorsortierten Waren umfasst, welche innerhalb eines gemeinsamen Umlaufförderers angeordnet sind und über den gemeinsamen Umlaufförderer miteinander in Verbindung stehen. Am Ausgang der Speicherstrecken ist dann jeweils ein Stoppmechanismus vorgesehen, der die Abwärtsbewegung der Waren stoppt und diese zu deren Ausspeicherung vereinzelt und über entsprechende Einfahrweichen in den Umlaufförderer eingegeben. Eine Optimierung der Förderdichte unter Berücksichtigung der Abstände der Transporteinheiten und unter steuerungsmässigem Einbezug der dortigen Trajektorien in den Förderbereichen ist dort nicht beschrieben.

JP H05/42074 U offenbart eine automatische Einstellvorrichtung für die Verwaltung des Abstands zwischen den Trägern an Montagelinien für Fahrzeuge. Diese Vorrichtung passt den Abstand zwischen den Fahrzeugen dynamisch an und reagiert dabei auf die Länge der transportierten Gegenstände. Herkömmliche Systeme hielten einen festen Abstand zwischen den Fahrzeugen ein und erforderten manuelle Eingriffe für Anpassungen, was eine Herausforderung für Effizienz und Sicherheit darstellte. Die Einstellvorrichtung verwendet Sensoren und reflektierende Elemente, um den Abstand zu erfassen und ihn entsprechend der Länge des Objekts anzupassen, um einen optimalen Abstand zu gewährleisten und Kollisionen und Materialkontakt zu verhindern. Die Vorrichtung ist spezifisch auf Montagelinien für Fahrzeuge zugeschnitten. Die Vorrichtung ist nicht flexibel in Bezug auf unterschiedliche Transportgüter, z. B. mit unterschiedlichen Formen oder Materialien, und ist von einer bestimmten Infrastruktur abhängig. Obwohl die Einstellvorrichtung automatisiert ist, kann die Vorrichtung in störenden Situationen manuelle Eingriffe erfordern und bietet keine Raumoptimierung in Echtzeit, was die Effizienz und Anpassungsfähigkeit unter dynamischen Betriebsbedingungen einschränkt, wie sie in Logistiksystemen häufig anzutreffen sind.

Es besteht ein allgemeines Bedürfnis nach Verbesserungen in diesem Gebiet.

**Darstellung der Erfindung**

Die vorliegende Erfindung strebt aufgabengemäss eine Lösung an, bei der den Nachteilen des Standes der Technik mindestens bereichsweise entgegengewirkt wird, die eine optimierte Förderdichte und einen möglichst störungsfreien Betrieb auch komplexer Lager- und Fördersysteme ermöglicht.

Nebst der Berücksichtigung der spezifischen obengenannten Nachteilen des Standes der Technik wird eine Erhöhung der Förderleistung in einem Fördersystem für Hängetransportelemente vorgesehen und auch die Speditionsvorbereitung des Fördersystems in diesem Gebiet soll möglichst verbessert werden.

Diese und andere Aufgaben werden gelöst durch eine erfindungsgemässe Abstandsoptimierungsvorrichtung, ein erfindungsgemässes Verfahren zur Förderung von Hängetransportelementen und ein erfindungsgemässes Hängefördersystem für Hängetransportelemente, gemäss den unabhängigen Ansprüchen. Weitere vorteilhafte Ausführungsformen sind in den abhängigen Ansprüchen gegeben.

Die erfindungsgemässe Lösung kann durch verschiedene, jeweils für sich vorteilhafte und, sofern nicht anders ausgeführt, miteinander kombinierbare Ausgestaltungen weiter verbessert werden. Auf diese Ausführungsformen und die mit ihnen verbundenen Vorteile ist im Folgenden eingegangen.

Ein erster Aspekt der Erfindung betrifft eine Abstandsoptimierungsvorrichtung für Hängetransportelemente, insbesondere eines Hängeförderers.

Eine erfindungsgemässe Abstandsoptimierungsvorrichtung für Hängetransportelemente umfasst mindestens eine Sensoreinrichtung, mindestens ein Abstandanpassungselement und mindestens eine Steuerungseinheit. Die mindestens eine Steuerungseinheit ist dazu ausgebildet, das mindestens eine Abstandanpassungselement auf Basis von Messungen der mindestens einen Sensoreinrichtung des freien Raums zwischen zwei benachbarten Hängetransportelementen zu steuern, so dass der Abstand zwischen benachbarten Hängetransportelementen anpassbar und parametrisiert eingestellt wird.

Die erwähnten Hängetransportelemente sind ein zentraler Bestandteil eines Hängeförderers in, an oder auf denen Hängefördergüter von einem Punkt zu einem anderen Punkt befördert werden. Die Hängetransportelemente sind auf die im System zu fördernden Hängefördergüter angepasst. Als Hängetransportelemente kommen neben Transporttaschen auch Kleiderbügel (wenn Kleidungsstücke gefördert oder kommissioniert werden sollen) oder insbesondere auch Transportgestelle oder Greifer zum Einsatz. Weiterhin können befüllbare Behältnisse oder auch Adapterelemente wie Ösen, Haken oder Greifer als Hängetransportelemente dienen. Vorteilhaft sind diese Adapterelemente steuerbar, so dass sie bei gewünschten Bearbeitungsschritten die Freigabe geförderter Waren erlauben oder aber auch in Störsituationen oder zur örtlichen Optimierung des Förderabstands eine Freigabe durch die Steuerungseinheit möglich ist.

Alternativ oder ergänzend ist die mindestens eine Steuerungseinheit ausgebildet, das mindestens eine Abstandanpassungselement auf Basis von Messungen der mindestens einen Sensoreinrichtung des freien Raums zwischen zwei benachbarten Förderelemente zu steuern, so dass der Abstand zwischen den benachbarten Förderelemente anpassbar und parametrisiert eingestellt wird.

Die vorliegende Abstandsoptimierungsvorrichtung ermöglicht nicht nur das Füllvolumen der Förderelemente optimiert zu halten, sondern die Dichte der zum Einsatz kommenden Hängetransportelemente während deren Förderung, Pufferung oder Lagerung in der Anlage zu verbessern. Die Erfindung bezweckt somit eine systemoptimierte bzw. systemgeregelte Beabstandung der Hängetransportelemente, was vorliegend auch als Optimieren der Förderdichte bezeichnet wird. Bei Hängefördersystemen der bereits genannten Art gilt es, die Hängetransportelemente systemtechnisch in ihrer gegenseitigen Beabstandung und Ausrichtung, insbesondere auch bei unterschiedlichen Bahnkurven, entlang der Förderstrecke anforderungsgemäss auszurichten oder anzuordnen, um diese verbessern zu können. Mit einer verbesserten Förderdichte kann eine höchstmögliche Förderleistung mit minimaler Kollisionsgefahr und geringerer Störungsanfälligkeit erzielt werden. Ein besonders schwieriger Aspekt neben der (veränderlichen) Geometrie der Förderelemente beim Erreichen einer optimierten Förderdichte ist die Berücksichtigung der Anlagengeometrie.

Idealerweise ist die Förderdichte dynamisch anpassbar an den sich verändernden Verlauf der Förderstrecke, da sich die optimierte Förderdichte je nach Förderbereich (Gerade, Kurve, Steigung, etc.) unterscheidet. Vorliegend wird mit Blick hierauf entsprechend von Trajektorien der Förderstrecken (oder auch Puffer- bzw. Lagerstrecken) gesprochen. Eine optimierte Förderdichte und Sicherheitstoleranzen bei Kurven sind hierbei beispielsweise aus der Krümmung der Kurve (und Ausrichtung der Förderelemente) ermittelbar, wobei die Fördergeschwindigkeiten zu berücksichtigen sind.

Vorteilhaft weisen die Hängetransportelemente Adapterelemente auf, die als Verbindungselement zwischen Hängetransportelementen oder Hängefördergütern und den Förderelementen des Fördersystem dienen. Damit sind die Hängetransportelemente einfach am Fördersystem beweglich montierbar. Vorteilhaft können die Adapterelemente auch höhenverstellbar sein. Dies erlaubt zusätzlich, den Abstand zwischen den einzelnen Hängetransportelementen zu verringern, da die Höhe eines Hängetransportelements so angepasst werden kann, dass der breiteste bzw. voluminöseste Bereich dieses Hängetransportelements in der Höhe mit dem dünnsten bzw. raumsparendsten Bereich des benachbarten Hängetransportelements korreliert. Die Hängeförderer könnten auch die Vorteile fortschrittlicher KI nutzen, um die Transportströme der transportierten Hängefördergüter vorherzusagen, Kapazitätsengpässe zu ermitteln und den Energieverbrauch zu senken. Dies kann auf der Grundlage der in den Hängetransportelementen geladenen Waren bzw. Produkten und der technischen Spezifikationen der Be- und Entladestationen erfolgen.

Ausserdem können diese Vorrichtungen als Teil der Hängeförderer in das Gesamtsystem integriert werden, so dass der Transport der Hängetransportelemente ihre Be- und Entladefähigkeiten und -kapazitäten berücksichtigt. Selbst bei der Verwendung von KIbasierten Systemen und langlebigen Materialien kann es zu einer störenden Kollision zwischen zwei Hängetransportelementen kommen, die das Transportprodukt beschädigt oder abnutzen kann, was im Extremfall zum Stillstand von Förderabschnitten oder des gesamten Hängeförderers führen kann. Erfindungsgemäss sollen solche Problembereiche möglichst vermieden bzw. so schnell wie möglich identifiziert werden, was insbesondere bei grossen Hängefördersystemen oder Räumen zeitaufwändig sein kann. An dieser Stelle kann auch erweiterte Realität zusätzlich zu den konstruktiven und fördertechnischen Massnahmen beigezogen werden. Ein Techniker, der eine Stelle auf dem Hängeförderer identifiziert, die eine Störung oder einen Stopp verursachen kann, kann mit dieser Technologie (z.B. Brille umfassend eine erweiterte Realitätsapplikation, oder bildgebendes Tablet oder Holografie) entsprechende Positionen oder Bereiche identifizieren und/oder die notwendigen Förderabstände an diesen Stellen ermitteln. Besonders vorteilhaft kann auch eine Simulation bzw. eine Visualisierung eines 3D-Modells der Hängeförderer mit Hängetransportelementen in Echtzeit eingesetzt werden, um die Optimierung Förderabstände zu unterstützen, bei Bedarf mit Visualisierung der mittels der Hängetransportelementen transportieren Waren, was zur Optimierung des Be- und Entladens der Hängetransportelemente beiträgt.

Für besondere Anwendungen umfasst mindestens ein Adapterelement (und/oder Förderelement) vorteilhaft ein stossdämpfendes Material oder Konstruktionselement, um die durch die Bewegung der Hängetransportelemente mittels eines Fördermittels verursachten Bewegungsimpulse zu verringern, insbesondere bei Richtungsänderungen oder beim Auf- und Abstieg von Förderstrecken. Alternativ dazu kann ein stossdämpfendes Teil zwischen dem Adapterelement und den Hängetransportelementen eingeführt sein. Um die Förderdichte des Hängeförderers zu erhöhen ist es ebenfalls vorteilhaft, diesen mit formflexiblen Transportelementen auszustatten.

Diese Massnahmen erlauben es, die Hängetransportelemente beim Beladen auf verschiedene Längen und Breiten zu justieren, so dass die Hängetransportelemente sich besser an den Transport von Gütern unterschiedlicher Form und unterschiedlichen Gewichts anpassen lassen. Beispielsweise können die Hängetransportelemente durch Hinzufügen oder Entfernen von Komponenten wie Reissverschlüsse, Klettverschlüsse, Riemen oder anderen Mechanismen adaptiert werden, wobei eine möglichst laufruhige Förderung der Transporteinheiten angestrebt bzw. bewirkt wird.

Vorteilhaft ist mindestens ein Adapterelement zur Messung des Gewichts der mit Hängefördergütern beladenen Hängetransportelementen oder eine ortsfeste Gewichtsmesseinheit vorgesehen.

Dabei kann eine Waagezelle am Adapterelement angeordnet sein. Die Waagezelle ist eine Einrichtung, die das Gewicht der Hängetransportelemente in ein elektrisches Signal umwandelt, das dann auf einer digitalen Anzeige angezeigt, ausgelesen oder zur Aufzeichnung und Analyse an die erste Rechnereinrichtung oder die Steuerungseinheit übertragen werden kann. Die Gewichtsmessung ist von Vorteil, um eine kontinuierliche und genaue Überwachung des Gewichts der beförderten Hängetransportelemente zu erreichen, was für die Qualitätskontrolle und die Bestandsverwaltung nützlich ist. Ausserdem trägt es dazu bei, den sicheren und effizienten Betrieb des Hängefördersystems zu verbessern, da eine Überlastung einzelner Hängetransportelemente zu Schäden oder Ausfallzeiten führen kann. So können aufgrund der entsprechenden Messung Kommissionen automatisiert auf mehrere Transportelemente gesteuert verteilt werden. Ergänzend kann diese Massnahme steuerungsrelevante Daten für die Optimierung der Konstruktion und des Betriebs des Hängefördersystems liefern, z. B. durch die Ermittlung von Engpässen oder Ineffizienzen der Steuerungseinheit selbst.

Es ist für besondere Anlagen vorteilhaft, die Hängetransportelemente, die Förder- oder Adapterelemente selbst mit Sensoren auszustatten, die neben dem Gewicht die dynamischen Kräfte beim Transport der Hängefördergüter überwachen oder das Risiko reduzieren, sensible Waren während des Transports zu beschädigen, insbesondere von zerbrechlichen Waren wie z.B. Glas, Lebensmitteln oder sortierten Transport- oder Wareneinheiten. Um dieses Risiko zu minimieren, können die Hängetransportelemente vorteilhaft mit Verschlüssen, Klammern oder Einrastelementen versehen sein, welche die Waren fixieren. Die Hängetransportelemente und/oder das Hängefördergut könnten mit Etiketten oder elektronisch auslesbaren Chips (z.B. RFID) zur Verfolgung, Weiterbearbeitung und Bestandsaufnahme ausgestattet werden.

Zur Förderung besonderer Waren kann ein Hängetransportelement oder ein Hängefördergut aus mehreren Fächern bzw. Abteilen bestehen, die es ermöglichen, die transportierten Waren innerhalb derer spezifisch anzuordnen oder zu sortieren.

Insbesondere können zwei oder mehr Hängetransportelemente miteinander verbunden sein. So können diese (oder ihre Abteile) senkrecht übereinander angeordnet und dabei demselben Förderelement zugeordnet sein. Ausserdem können sie alternativ oder zusätzlich gegenseitig so ausgerichtet sein, dass ein Hängetransportelement (bzw. dessen Abteil) in der Förderrichtung und das andere (bzw. dessen Abteil) gegen die Förderrichtung angeordnet ist. Diese Optionen sind in erster Linie von der Gestaltung des von Hängefördergütern beladenen Hängetransportelements bzw. der zu fördernden Waren abhängig. Eine weitere Möglichkeit besteht darin, zwei oder mehr Hängetransportelemente (bzw. deren Abteile) seitlich nebeneinander anzuordnen.

Diese Lösung hat den Vorteil, dass die Produktivität erhöht wird, da die transportierten Waren mit ähnlichen Eigenschaften und Abmessungen in verschiedenen Fächern untergebracht werden, was ihre spätere Sortierung an Entnahmestellen erleichtert. Darüber hinaus kann eine Optimierung der Fördermenge während des Transports erreicht werden, indem mehr Produkte den einzelnen Hängetransportelementen beigegeben werden können und so die Förderdichte bzw. -kapazität ebenfalls erhöht wird. Ein weiterer wichtiger Aspekt der Hängetransportelemente ist das Material, aus dem diese hergestellt werden. Je strapazierfähiger das Material ist, desto länger kann ein Hängetransportelement im Einsatz sein und desto mehr Last kann es tragen, zum Beispiel bis zu 25 kg oder mehr. Zu solchen Materialien gehören unter anderem Kevlar, Canvas oder Polypropylen.

Vorteilhaft ist der Hängeförderer selbst aus leichten Materialien wie Aluminium oder Verbundwerkstoffen hergestellt, was eine grössere Flexibilität und eine einfachere Handhabung ermöglicht, wenn sie häufig montiert und demontiert werden müssen.

In dieser Hinsicht kann man sich ihren Einsatz dank des hohen Automatisierungsgrads der Steuerungseinheit nicht nur als feste Einheiten in einem Lager oder einer Fabrik vorstellen, sondern als Baukasten, die schnell an den Ort des Bedarfs gebracht, montiert und wieder demontiert werden können.

Die Abstandsoptimierungsvorrichtung dient dazu, die Förderung von Hängetransportelementen pro Zeiteinheit zu optimieren, und zwar in Abhängigkeit von der Grösse des Abstands zwischen den einzelnen Hängetransportelementen. Die Abstandsoptimierungsvorrichtung ermöglicht es, deren Abstände möglichst zu minimieren, um umgekehrt die Förderdichte zu erhöhen. Dabei sollen trotzdem ausreichend grosse Abstände bestimmt werden, um unerwünschte Kollisionen zwischen einzelnen Hängetransportelementen zu vermeiden. Dies ist vorteilhaft, um den Verschleiss dieser Hängetransportelemente zu minimieren und das Risiko einer Beschädigung der in den Hängetransportelementen beförderten Hängefördergüter bzw. Waren zu verhindern sowie Störungen zu vermeiden.

Die Abstandsoptimierungsvorrichtung kann ergänzend auch zur Priorisierung von Hängefördergütern verwendet werden. Dies ist vor allem dann vor Vorteil, wenn ein Hängefördersystem mehr als eine Beladestation oder mehrere zusammengeführte Förderstrecken enthält. In diesem Fall kann beispielsweise einer oder mehrerer der Hängefördergüter einer ersten Beladestation oder Förderstrecke gegenüber denjenigen der zweiten eine höhere Priorität zugeordnet werden. Auf diese Weise kann im Förderstrom steuerungsmässig ein genügender Freiraum für die priorisierten Hängeförderelemente bewirkt werden. Diese Einstellung ist flexibel und kann jederzeit den aktuellen Erfordernissen angepasst werden.

Als Abstandsoptimierungsvorrichtung kann insbesondere mindestens eine erfindungsgemäss angesteuerte Vereinzelungseinrichtung entlang der Förderstrecken, besonders vorteilhaft nach je einer Beladestation, angeordnet sein. Die Vereinzelungseinrichtung weist vorteilhaft eine Stopp-/Freigabeeinheit für die Fördereinheiten auf oder kann ergänzend oder alternativ eine Brems-/Beschleunigungseinheit für letztere enthalten.

Die erfindungsgemässe Lösung kann durch die folgenden weiteren, jeweils für sich vorteilhaften Ausführungen ergänzt und weiter verbessert werden.

Gemäss einer vorteilhaften Ausführungsform ist vorgesehen, dass die mindestens eine Sensoreinrichtung ausgebildet ist, mindestens ein Lichtmass zwischen benachbarten Hängetransportelementen oder Förderelementen zu messen.

Zur Bestimmung des Lichtmasses gilt, vereinfacht gesagt, der freie Raum zwischen zwei Hängetransportelementen in ihrer statischen bzw. im Transport auch bewegten Hängelage.

Das Messen mindestens eines Lichtmasses ermöglicht ein Erkennen einer für den Abstand von benachbarten Hängetransportelementen indikativen Information, mit welcher, der Abstand von benachbarten Hängetransportelementen zueinander in der mindestens einen Steuerungseinheit bestimmbar ist oder direkt gemessen wird. Unter dem Begriff Lichtmass versteht man erfindungsgemäss eine, für den Abstand zwischen mindestens zwei Hängetransportelementen, indikativen Information, im Sinne einer Linie, einer Fläche oder auch eines Volumens. Welche dieser drei Methoden vorteilhaft ist, hängt von der Komplexität des Volumens bzw. Raums zwischen den Hängetransportelementen und der Ausführungsform der mindestens einen Sensoreinrichtung ab, und ist daher auch mithilfe der Art bzw. des Aufbaus der mindestens einen Sensoreinrichtung auswählbar. Darüber hinaus gelten als benachbarte Hängetransportelemente nicht notwendigerweise Hängetransportelemente, die unmittelbar nebeneinander angeordnet sind, sondern auch Hängetransportelemente, die sich in gegenseitiger Transportnähe zum Fördersystem befinden (z.B. bei Weichen oder Kreuzungen von Förderstrecken).

Ferner ist gemäss einer vorteilhaften Ausführungsform, alternativ oder ergänzend, die mindestens eine Sensoreinrichtung dazu ausgebildet, mindestens eine Position von mindestens zwei benachbarten Hängetransportelementen und/oder Förderelementen zu bestimmen.

Das Erkennen der Position von mindestens zwei benachbarten Hängetransportelementen umfasst eine für den Abstand von benachbarten Hängetransportelementen indikative Information, mit welcher der Abstand von benachbarten Hängetransportelementen zueinander in der mindestens einen Steuerungseinheit bestimmbar ist. Dazu kann auch der Abstand zwischen zwei Förderelementen dienen, oder auch der Abstand zwischen einem Hängetransportelement und einem Förderelement. Insbesondere kann man bei bekannten Volumen eines nachlaufenden Hängetransportelements bzw. am Volumen des Hängeförderguts am Hängetransportelement einen optimierten Abstand zum vorlaufenden Hängetransportelemente zielgerichtet einstellen. Das Erkennen des mindestens einen Lichtmasses sowie mindestens einer Position mindestens eines Hängetransportelements und/oder Förderelements ermöglicht ein weiteres optimiertes Einstellen der Abstände der Hängetransportelemente und/oder Förderelemente, sodass die Förderdichte in einem Hängefördersystem weiter erhöht ist.

Gemäss einer weiteren vorteilhaften Ausführungsform ist vorgesehen, dass mindestens ein Lichtmassminimum zwischen benachbarten Hängetransportelementen ein Mindestwert-Abstand zwischen diesen benachbarten Hängetransportelementen ist.

Das Lichtmassminimum bezeichnet den Mindestwert des gemessenen Lichtmasses zwischen benachbarten Hängetransportelementen. Die Verwendung dieses Mindestwert-Abstands hat den Vorteil, dass das Risiko möglicher Kollisionen zwischen einzelnen Hängetransportelementen beim Fördern im Fördersystem minimiert ist. Damit ist ein sicheres und schonendes Fördern des Hängeförderguts mittels der Hängetransportelemente im Fördersystem sichergestellt.

Würde man einen Abstand zulassen, der dem Durchschnitt aller Werte des mindestens einen Lichtmasses oder sogar seinem Maximalwert zwischen Hängetransportelementen entspricht, bestünde ein Kollisionsrisiko im Fördersystem, besonders an jenen Punkten, an dem das Lichtmass kleiner als der zugelassene Abstand ist. Ferner ist das Lichtmassminimum zwischen zwei benachbarten Hängetransportelementen entlang der Förderstrecke nicht konstant, sondern ändert sich in der Regel in Abhängigkeit einer Trajektorie des Hängeförderers (z.B. bei Kurven). Deswegen kann das Lichtmassminimum als Funktion zweier benachbarter Hängetransportelementen und deren jeweiligen Trajektorienposition beschrieben werden. Versteht man je zwei benachbarte Hängetransportelemente als logische Gruppe, so kann deren Lichtmassminimum vereinfachend in Funktion des Lichtmasses und des jeweiligen Trajektorienbereichs oder der Trajektorienposition beschrieben werden, d.h.

$$\textit{Lichtmassminimum} = f(\text{Lichtmass benachbarter Hängetransportelemente, Trajektorienposition}).$$

Das vorerwähnte parametrisierte Einstellen des Abstands zwischen benachbarten Hängetransportelementen bedeutet, dass die Förderdistanz unmittelbar als Funktion des Lichtmasses bzw. des Lichtmassminimums unter Berücksichtigung von Trajektorienpositionen angepasst und bestimmt wird. Die wesentlich ungenauere und dennoch aufwendige Messung der Dicke bzw. der Ausdehnung von Transporteinheiten oder des Transportförderguts findet daher keine Anwendung. Parametrisiert ist das erfindungsgemässe Einstellen des Abstands, weil der Sollabstand (Lichtmassminimum oder Lichtmassminimum mit Sicherheitszuschlag) direkt in Funktion des Lichtmasses und der Trajektorienpositionen gemessen oder berechnet wird, die dann als Steuergrösse die Förderabstände der Hängetransportelemente (und damit die Förderdichte) vorgibt. Die Steuergrösse kann direkt auf die Förderelemente oder Adapterabstände bzw. die entsprechenden Steuervorrichtungen, wie insbesondere eine Vereinzelungseinheit, einwirken und die gewünschten Abstände einstellen.

Bei besonders komplexen Anlagen kann zur weiteren Optimierung für die Bestimmung des Lichtmasseminimums alternativ auch die Berücksichtigung weitere Hängetransportelement-Eigenschaften vorgesehen werden. In diesen Fällen bestimmt sich das Lichtmass wie folgt:

$$\textit{Lichtmassminimum} = f(\text{Lichtmass benachbarter Hängetransportelemente, Trajektorienposition, Hängetransportelemente-Eigenschaften})$$

Die entsprechend dieser Variante der Erfindung erfolgende Bestimmung eines erweiterten Lichtmassminimums ermöglicht die Berücksichtigung weiterer Eigenschaften des Hängetransportelements, wie z. B. dessen Gewicht oder Material, aus dem es hergestellt ist, oder auch der von diesem geförderten Ware, was sich unter anderem auf die Anpassungsfähigkeit des Hängetransportelements an die Hängefördergüter auswirkt, mit denen dieses beladen ist.

Gemäss einer weiteren vorteilhaften Ausführungsform ist vorgesehen, dass mindestens eine Verdichtungsvorrichtung vorhanden ist.

Die mindestens eine Verdichtungsvorrichtung dient dazu, die Position oder Anordnung der Hängefördergüter in den Hängetransportelementen zu optimieren und/oder zu fixieren. Die mindestens eine Verdichtungsvorrichtung kann beispielsweise ausgebildet sein, Hängefördergüter in, an oder auf den Hängetransportelementen in Bewegung zu bringen, zu schütteln oder zu vibrieren, um diese zu verdichten, sodass sie kompakter und mit verringerten Volumen angeordnet sind. Andere ergänzende Mechanismen, z.B. Kompressionsbürsten, sind ebenfalls vorteilhaft verwendbar, um die Hängefördergüter in den Hängetransportelementen optimiert anzuordnen.

Besonders vorteilhaft ist die mindestens eine Verdichtungsvorrichtung vor der mindestens einen Sensoreinrichtung entlang einer Förderrichtung des Hängeförderers positioniert.

Mithilfe der mindestens einen Verdichtungsvorrichtung wird somit die Wahrscheinlichkeit minimiert, dass die Hängefördergüter während der weiteren Förderung ihre Position in den Hängetransportelementen unerwünscht verändern. Dies ist deshalb von Vorteil, weil das Lichtmass zwischen den Hängetransportelementen nach dem Beladen mit den Hängefördergütern weniger anfällig für Veränderungen, durch zum Beispiel Neigen oder Schwingen der Hängetransportelemente, ist. Darüber hinaus hat es auch den positiven Effekt, dass der Bedarf an Sensoreinrichtungen zur Messung des Lichtmasses entlang des Hängeförderers sinkt. In günstigen Fällen ist es erforderlich, die Messung des Lichtmasses im Fördersystem nur einmal durchzuführen, und zwar unmittelbar nach der zuvor genannten Verdichtungsvorrichtung oder einer Beladestation. Es ist jedoch von Vorteil, den Hängeförderer mit mehreren Sensoreinrichtungen zu versehen und damit die Robustheit der gesamten Förderlösung zu erhöhen.

Gemäss einer weiteren vorteilhaften Ausführungsform ist vorgesehen, dass mindestens ein Identifikationsmittel vorhanden ist, wobei das mindestens eine Identifikationsmittel entlang der Förderrichtung des Hängeförderers mindestens einem Hängetransportelement oder Förderelement mindestens ein Identifikationsmerkmal zuweist.

Das mindestens eine Identifikationsmittel dient der Identifikation der einzelnen Hängetransportelemente. Als mindestens ein Identifikationsmittel kann ein Scanner oder ein Marker, oder eine Kombination eines Scanners und eines Markers dienen. Ein Scanner kann Identifikationsmerkmale erkennen und gegebenenfalls an die Steuerungseinheit weiterleiten. Ein Marker markiert eine Hängetransportelement mit mindestens einem Identifikationsmerkmal, sodass dieses dort fixiert angeordnet ist. Vorteilhaft ist jedem Hängetransportelement mindestens ein Identifikationsmerkmal zugewiesen. Man kann beispielsweise eine Nummer, einen RFID-Tag oder einen QR-Code als Identifikationsmerkmal verwenden, wobei es besonders vorteilhaft ist, dass wenn dieses Merkmal für jedes Hängetransportelement oder Förderelement eindeutig ist. Dadurch ist es möglich, jedes Hängetransportelement oder Förderelement zu identifizieren und mit spezifischen Eigenschaften, wie beispielsweise das Gewicht, die Art oder die Fragilität der geladenen Hängefördergüter, oder die Grösse des Hängetransportelements in Verbindung zu bringen. Das mindestens eine Identifikationsmerkmal kann auch einen Zeitstempel enthalten, um einen Zeitpunkt zu speichern, an dem ein Hängetransportelement oder Förderelement eine Beladestation verlassen hat. Beispielsweise ist somit die Förderzeit der Hängefördergüter im Fördersystem bestimmbar, was insbesondere bei verderblichen Hängefördergütern vorteilhaft ist. Alle diese Informationen sind deshalb von Vorteil, weil sie zu einer besseren Verfolgung von sowohl Hängetransportelementen als auch Hängefördergütern führen und zur Optimierung der Förderdichte nutzbar sind.

Das mindestens eine Identifikationsmittel kann auch zur zeitlichen Überwachung und Steuerung der Belastung des Hängetransportelements oder des Förderelements verwendet werden. Die Zeit, die das Hängetransportelement zur Förderung von Hängefördergütern (integriert) aufwendet, kann erfasst und dem mindestens einen Identifikationsmittel zugeordnet werden. Gleichzeitig ist dem Fachmann bekannt, nach welcher Zeit das Hängetransportelement so weit abgenutzt ist, dass seine Wartung vorteilhaft ist. Diese Zeit lässt sich als kritische Betriebszeit bezeichnen. Dank dieser Lösung ist es möglich, die Wartungskontrolle der Hängetransportelemente zu automatisieren, indem zum Beispiel das baldige Ende der kritischen Betriebszeit des Hängetransportelements automatisch gemeldet wird. So kann insbesondere verhindert werden, dass ein Hängetransportgut durch eine starke Beschädigung des Hängetransportelements beeinträchtigt wird, indem die kritische Betriebszeit des Hängetransportelements überschritten wird.

Gemäss einer weiteren vorteilhaften Ausführungsform ist vorgesehen, dass das mindestens eine Identifikationsmittel dem mindestens einen Identifikationsmerkmal des Hängetransportelements oder Förderelements einen Abstand zu mindestens einem benachbarten Hängetransportelement oder Förderelement zuordnet.

Dies ermöglicht es, dass es nicht erforderlich ist, das mindestens eine Lichtmass zwischen benachbarten Hängetransportelementen oder Förderelementen nach jeder Abstandsanpassung mittels des mindestens einen Abstandanpassungselements zu messen, um den Abstand zu bestimmen, sondern diesen mittels einer Software in einer Rechnereinrichtung zu berechnen. Das vereinfacht und verbilligt die gesamte Fördertechnologie. Es ist jedoch vorteilhaft, mehrere Sensoreinrichtungen entlang des Fördersystems einzurichten, mit denen Grössenänderungen in oder an den Hängetransportelementen, z. B. durch Umkippen der Hängefördergüter, ermittelt werden können. Nicht zuletzt sind die benachbarten Hängetransportelemente in zwei Kategorien eingeteilt, nämlich in vorlaufende und nachlaufende Hängetransportelemente, relativ zum betreffenden Hängetransportelement. Die Entscheidung, welcher Abstand, oder ob mehrere Abstände in den Identifikationsmerkmalen zu verwenden sind, hängt für den Fachmann erkenntlich von der jeweiligen Anwendung im Fördersystem ab.

Gemäss einer weiteren vorteilhaften Ausführungsform ist vorgesehen, dass mindestens ein Abstand zwischen benachbarten Hängetransportelementen von einer Trajektorie des Hängeförderers abhängig ist.

Der mindestens eine Abstand kann insbesondere das Lichtmassminimum sein.

Unter der Trajektorie des Hängeförderers ist seine 3D-Ausgestaltung bzw. der Verlauf seiner Förderstränge zu verstehen. Die Trajektorie umfasst zum Beispiel gerade Abschnitte und Kurven, die auf gleicher Höhe liegen, kann aber auch höhenveränderliche Abschnitte umfassen. Diese Trajektorie wird vorteilhaft bei der Optimierung des Abstands zwischen benachbarten Hängetransportelementen berücksichtigt. Beispielsweise kann der auf einem geraden Abschnitt optimierte Abstand in einer Kurve aufgrund des Drehens der Hängetransportelemente relativ zueinander auf dem Innenradius zu klein sein, wodurch es zu Kollisionen zwischen den Hängetransportelemente bzw. dem Hängefördergut kommen kann. Eine derartige Kollision ist insbesondere dann möglich, wenn die Hängetransportelemente unterschiedliche Breiten oder grosse Tiefen aufweisen. Das Gleiche gilt für die Abschnitte, bei denen sich die Höhe der Hängetransportelemente relativ zum Boden ändert, und zwar vor allem in dem Fall, wenn sich das mindestens eine Lichtmass zwischen benachbarten Hängetransportelementen in ihrer vertikalen Richtung unterscheidet.

Alternativ oder ergänzend ist gemäss einer weiteren vorteilhaften Ausführungsform vorgesehen, dass mindestens ein Abstand zwischen benachbarten Förderelementen von einer Trajektorie des Hängeförderers abhängig ist.

Der mindestens eine Abstand kann insbesondere das Lichtmassminimum sein.

Beispielsweise kann es zu Kollisionen von Förderelementen in jenen Abschnitten kommen, bei denen sich die Höhe der Förderelemente relativ zum Boden ändert, und zwar vor allem in dem Fall, wenn sich das mindestens eine Lichtmass zwischen benachbarten Förderelemente in ihrer vertikalen Richtung unterscheidet.

Vorteilhaft ist mindestens ein Abstand zwischen benachbarten Hängetransportelementen von mindestens einer Dimension des Hängetransportelements abhängig.

Dickere oder breite Hängetransportelemente oder dünnere und schmälere Hängetransportelemente benötigen einen unterschiedlichen Abstand zu einem benachbarten Hängetransportelement. Die mindestens eine Sensoreinrichtung kann ausgebildet sein, mindestens eine Dimension des Hängetransportelements zu erfassen. Besonders vorteilhaft ist die Breite, also eine Dimensionierung des Hängetransportelements senkrecht zur Fahrtrichtung, mit der mindestens einen Sensoreinrichtung erfassbar ist, sodass mindestens ein Abstand abhängig in Bezug zu der Breite des Hängetransportelements einstellbar ist. Damit ist das Fördern der Hängetransportelemente in den Kurven der Trajektorie verbessert und eine unerwünschte Kollision in den Kurven vermeidbar.

Gemäss einer weiteren vorteilhaften Ausführungsform ist vorgesehen, dass eine erste Rechnereinrichtung vorhanden ist.

Die erste Rechnereinrichtung ist mit der mindestens einen Sensoreinrichtung zum Austausch von Daten bzw. Messdaten verbunden. Die erste Rechnereinrichtung empfängt die Messdaten von der mindestens einen Sensoreinrichtung und berechnet anhand eines Rechenmodells einfach und reproduzierbar mindestens einen optimierten Abstand zwischen benachbarten Hängetransportelementen oder Förderelemente. Die erste Rechnereinrichtung ist mit der mindestens einen Steuerungseinheit zum Austausch von Steuerdaten verbunden, um das mindestens eine Abstandanpassungselement derart zu steuern, dass der berechnete optimierte Abstand zwischen benachbarten Hängetransportelementen oder Förderelementen anpassbar ist. Damit kann eine Förderdichte erhöht werden.

Insbesondere kann die erste Rechnereinrichtung vorteilhaft ausgebildet sein, mindestens einen optimierten Abstand basierend auf der Trajektorie des Hängeförderers zu berechnen.

Die erste Rechnereinrichtung empfängt die Messdaten von der mindestens einen Sensoreinrichtung und berechnet anhand eines Berechnungsmodells einfach und reproduzierbar mindestens einen optimierten Abstand auf Basis der Trajektorie oder einen Teiltrajektorie des Hängeförderers. Beispielsweise berechnet die erste Rechnereinrichtung einen optimierten Abstand zwischen Hängetransportelementen auf der Grundlage des von der mindestens einen Sensoreinrichtung gemessenen mindestens einen Lichtmasses. Darüber hinaus ist der Abstand ein Parameter, der optimiert wird, um die höchstmögliche Förderdichte zu erreichen und gleichzeitig das Risiko von Kollisionen zwischen Hängetransportelementen zu minimieren. Zu den Parametern des Berechnungsmodells können beispielsweise die Abmessungen des hängenden Transportelements, seine Dimension, Geschwindigkeit, Beschleunigung und sein Massenschwerpunkt gehören.

Alternativ oder ergänzend kann die erste Rechnereinrichtung vorteilhaft ausgebildet sein, mindestens einen optimierten Abstand basierend auf einer Geschwindigkeit mindestens eines Hängetransportelements zu berechnen.

Damit sind beispielsweise höhenveränderte Abschnitte der Trajektorie sowie ein Schaukeln bzw. Schwenken der Hängefördergüter oder der Hängetransportelemente berücksichtigt, um eine Kollision zu verhindern und trotzdem eine optimierte Förderdichte am Fördersystem zu erreichen. Schliesslich ist einer der Gründe, warum es zu einer Kollision von Hängetransportelementen kommen kann, die Beschleunigung der Hängetransportelemente, zum Beispiel beim Verlassen einer Beladestation oder eines Abstandanpassungselements. Diese Beschleunigung beeinflusst zusammen mit dem Gewicht des Hängetransportelements und der Gewichtsverteilung über die Länge des Hängetransportelements seine Neigung in Fahrtrichtung. Deswegen ist es vorteilhaft, dieses Merkmal bei der Bestimmung des optimalen Abstands zwischen den Hängetransportelementen durch die erste Rechnereinrichtung zu berücksichtigen. Dank der Minimierung von Kollisionen zwischen den Hängetransportelementen ist ihr erhöhter Verschleiss und eine mögliche Beschädigung der Hängetransportgüter zu vermeiden oder mindestens zu verringern.

Vorteilhaft ist eine künstliche Intelligenz (KI) mit der ersten Rechnereinrichtung verbunden oder dort integriert, um mindestens den optimierten Abstand zwischen benachbarten Hängetransportelementen oder Förderelementen einzustellen oder die Förderbahnen so zu steuern, dass optimierte Förderkapazitäten vorgesehen sind.

Die KI erhält beispielsweise Daten von der mindestens einen Sensoreinrichtung. Die KI kann auch Daten von dem mindestens einen Identifikationsmittel erhalten, um mindestens den optimierten Abstand zwischen benachbarten Hängetransportelementen ausgeben zu können. Die KI kann mit Trainingsdaten trainiert werden, wobei die Trainingsdaten Identifikationsmerkmale zu einzelnen Hängetransportelemente oder auch von Messdaten der mindestens einen Sensoreinrichtung umfassen können. Insbesondere können die Trainingsdaten auch historische Daten umfassen, welche beispielsweise bei der Inbetriebnahme des Fördersystems erstellt wurden. Damit wird die KI mit Daten von demselben Fördersystem trainiert, sodass ein schnelles Lernen ermöglicht wird.

Gemäss einer weiteren vorteilhaften Ausführungsform ist vorgesehen, dass die mindestens eine Sensoreinrichtung ausgebildet ist, eine dynamische Raumform der Hängetransportelemente zu erkennen.

Alternativ oder ergänzend kann vorteilhaft eine dynamische Raumform der Hängetransportelemente von der Steuerungseinheit oder Rechnereinrichtung berechnet werden.

Beispielsweise kann die dynamische Raumform von der Steuerungseinheit oder Rechnereinrichtung aus den Messdaten der Sensoreinrichtung und/oder weiteren Steuerungsinformationen (z.B. historischen Daten oder vorteilhaft Default-Daten für die Hängetransportelemente) berechnet werden.

Unter der dynamischen Raumform eines Hängetransportelements wird vorliegend die ermittelte oder berechnete Raumgeometrie verstanden, welche die Geometrie dieses Hängetransportelements einschliesslich seiner maximalen dynamischen Auslenkungen während der Förderung (inklusive seiner beigegebenen Waren bzw. seines Maximalvolumens), vorteilhaft mindestens dessen Schwenkbewegungen in und gegen die Förderrichtung, umfasst. Die Aussenfläche der so ermittelten dynamischen Raumform für je zwei benachbarte Hängetransportelemente erlaubt die Ermittlung des Lichtmasses zwischen diesen. Die Auslenkungen entstehen durch die Bewegung der Hängetransportelemente, wie ein Schaukeln, Schwenken oder Verdrehen, oder eine Neigung von diesen. Eine Leitsteuerung oder eine datengestützte lokale Ansteuerung von Vereinzelungselementen bestimmt auf diese Weise eine optimierte, minimale Beabstandung der Hängetransportelemente stromabwärts. Das Berücksichtigen der dynamischen Raumformerkennung ist besonders vorteilhaft, weil die Hängetransportelemente für die Messung des mindestens einen Lichtmasses nicht angehalten werden müssen, weshalb die Messung während ihrer Bewegung dynamisch erfolgen kann. Dieser Aspekt erhöht die Förderdichte des Hängefördersystems weiter massgeblich. Es ist jedoch auch möglich, das Lichtmass zwischen benachbarten statischen, d.h. sich nicht bewegenden, Hängetransportelementen mittels der mindestens einen Sensoreinrichtung zu messen und Toleranzwerte hinzuzurechnen. Schliesslich ist es besonders vorteilhaft, sowohl die statische als auch dynamische Raumform des Lichtmasses auf einem geraden Abschnitt der Trajektorie zu messen, da die Raumform des Lichtmasses dort nicht durch die Drehung der Hängetransportelemente verformt ist.

Gemäss einer weiteren vorteilhaften Ausführungsform ist vorgesehen, dass die mindestens eine Sensoreinrichtung als mindestens eine Kamera ausgeführt ist.

Es ist vorteilhaft, dass die mindestens eine Sensoreinrichtung in einem angemessenen Abstand und in einer angemessenen Höhe zum Hängeförderer angebracht ist, um beispielsweise das mindestens eine Lichtmass reproduzierbar zu messen.

Die Vorteile der Kamera liegen im günstigen Preis und in der Geschwindigkeit der Messung sowie der betriebssicheren Verwendbarkeit.

Alternativ oder ergänzend ist vorteilhaft die mindestens eine Sensoreinrichtung als mindestens ein Lasersensor ausgeführt.

Der Lasersensor bietet genaue und robuste Messungen unter verschiedenen Betriebsbedingungen. Ferner ist es auch möglich, einen Strukturlichtscanner als mindestens eine Sensoreinrichtung zu benutzen, um eine verbesserte Messung zu erhalten.

Alternativ oder ergänzend ist vorteilhaft die mindestens eine Sensoreinrichtung als mindestens ein Ultraschallsensor ausgeführt.

Der Ultraschallsensor funktioniert, neben den zuvor genannten Vorteilen, bei allen Lichtverhältnissen und bietet eine genaue und schnelle Messung, ohne dass dieser aufwendig kalibriert werden muss.

Vorteilhaft umfasst die mindestens eine Sensoreinrichtung eine zweite Rechnereinrichtung.

Die zweite Rechnereinrichtung dient dazu, dass beispielsweise das mindestens eine Lichtmassminimum zwischen benachbarten Hängetransportelementen aus dem gemessenen Lichtmass, das heisst den Abstand, zu ermitteln.

Ein zweiter Aspekt der Erfindung betrifft ein Verfahren zur Förderung von Hängetransportelementen insbesondere eines Hängeförderers.

Ein erfindungsgemässes Verfahren umfasst die Schritte:

- Erfassen mindestens eines Abstands zwischen benachbarten Hängetransportelementen und/oder Förderelementen,

- Optimierung des mindestens einen Abstands zwischen den benachbarten Hängetransportelementen mittels mindestens eines Abstandanpassungselements.

Das erfindungsgemässe Verfahren wird vorteilhaft mit mindestens einer erfindungsgemässen Abstandsoptimierungsvorrichtung durchgeführt.

Das erfindungsgemässe Verfahren kann auch weitere Schritte umfassen.

Das Verfahren ermöglicht es, die Abstände zwischen Hängetransportelementen und/oder Förderelementen auf einen Wert zu minimieren, um die Förderdichte zu erhöhen, und andererseits ausreichend grosse Abstände zu bestimmen, um Kollisionen zwischen einzelnen Hängetransportelementen zu vermeiden. Dies ist vorteilhaft, um den Verschleiss dieser Hängetransportelemente zu minimieren und das Risiko einer Beschädigung der in den Hängetransportelementen beförderten Hängefördergüter zu verringern.

Die erfindungsgemässe Lösung kann durch die folgenden weiteren, jeweils für sich vorteilhaften Ausführungen zudem ergänzt und weiter verbessert werden.

Gemäss einer vorteilhaften Ausführungsform des Verfahrens ist vorgesehen, dass eine Geschwindigkeit mindestens eines Hängetransportelements entlang einer Förderrichtung des Hängeförderers mittels des mindestens einen Abstandanpassungselements verändert wird.

Es ist zu beachten, dass das mindestens eine Abstandanpassungselement die Geschwindigkeit in verschiedener Art und Weise verändern kann. Beispielsweise umfasst das mindestens eine Abstandanpassungselement eine Bremseinheit, welche das mindestens eine Hängetransportelement verzögert. Alternativ oder ergänzend umfasst das mindestens eine Abstandanpassungselement eine Magneteinheit, welche das mindestens eine Hängetransportelement verzögert. Es ist auch möglich, die Geschwindigkeit mindestens eines Hängetransportelements mittels eines pneumatischen Zylinders oder auch mittels eines elektromechanischen Steuerelements anzupassen. Durch Einstellen des vom Zylinder ausgeübten Drucks kann die Geschwindigkeit des mindestens einen Hängetransportelements erhöht oder verringert werden, abhängig davon, ob der Druck entlang oder gegen die Förderrichtung geliefert wird. Weiterhin ist die Verwendung einer Bremse oder eines Stoppelements zur Verringerung der Geschwindigkeit des Hängetransportelements möglich. Eine entsprechende Ansteuerung kann z.B. mechanisch oder pneumatisch sein. Eine mechanische Bremse kann aus zwei Bremsbelägen bestehen, die miteinander in Kontakt gebracht werden und eine Widerstandskraft erzeugen, die das mindestens eine Hängetransportelement verzögert. Eine pneumatische Bremse kann die Bremskraft mit Hilfe von Druckluft erzeugen, um das mindestens eine Hängetransportelement zu verzögern.

Gemäss einer weiteren vorteilhaften Ausführungsform des Verfahrens ist vorgesehen, dass eine Geschwindigkeit mindestens eines Hängetransportelements entlang der Förderrichtung des Hängeförderers durch mindestens eine Steuerungseinheit gesteuert wird.

Damit ist die Fördermenge in dem Fördersystem regelbar, sodass die Menge der Hängetransportelemente bzw. Hängefördergüter einfach einstellbar ist.

Ferner ist vorteilhaft, dass die mindestens eine Steuerungseinheit eine Geschwindigkeit mindestens eines Hängetransportelements des Hängeförderers berücksichtigt.

Dies ist deshalb von Vorteil, weil die mindestens eine Steuerungseinheit Informationen darüber besitzt, wie hoch die Eingangsgeschwindigkeit mindestens eines Hängetransportelements ist und somit auch bestimmen kann, ob diese Geschwindigkeit erhöht oder verringert werden soll.

Alternativ oder ergänzend berücksichtigt vorteilhaft die mindestens eine Steuerungseinheit die Trajektorie des Hängeförderers.

Die Berücksichtigung der Trajektorie des Hängeförderers ist deshalb vorteilhaft, weil sich die optimalen Abstände zwischen benachbarten Hängetransportelementen unterscheiden, ja nachdem wo sie sich auf der Förderstrecke der Trajektorie befinden. So sind beispielsweise die optimalen Abstände eines geraden Abschnitts des Hängeförderers nicht mehr optimal für eine entlang der Trajektorie vorhandene Kurve, weil dort Hängetransportelemente ihre Position und damit auch die Abstände zueinander verändern. Inwieweit sich die Abstände in einer Kurve im Vergleich zu einem geraden Abschnitt der Trajektorie verändern, hängt vom Radius der Kurve ab. Daher ist es vorteilhaft, diese Parameter zu berücksichtigen, indem die mindestens eine Steuerungseinheit die Abstände zwischen benachbarten Hängetransportelementen auch in Abhängigkeit von der Trajektorie und Position mindestens eines Hängetransportelements berechnet und das Abstandanpassungselement dementsprechend steuert. Nicht zuletzt ist zu beachten, dass die optimalen Abstände eines geraden Abschnitts der Trajektorie nicht nur durch eine Kurve beeinflusst werden, sondern auch durch Abschnitte, in denen sich die Höhenlage der Hängetransportelemente ändert, da deren gegenseitige Lage bzw. Abstand aufgrund der Steigung der Förderabschnitte beeinflusst wird. Es ist daher von Vorteil, wenn Hängetransportelemente in diesen Abschnitten mit verschieden Abständen und beziehungsweise Geschwindigkeiten gefördert werden.

Alternativ oder ergänzend berücksichtigt vorteilhaft die mindestens eine Steuerungseinheit mindestens einen Abstand zwischen benachbarten Hängetransportelementen.

Die mindestens eine Steuerungseinheit sollte mit dem mindestens einen Abstandanpassungselement zum Austausch von Steuerdaten vorzugsweise verbunden sein, da die

Geschwindigkeit der Hängetransportelemente hauptsächlich durch das mindestens eine Abstandanpassungselement angepasst wird.

Insbesondere berücksichtigt vorteilhaft die mindesten eine Steuereinheit das Lichtmassminimum zwischen benachbarten Hängetransportelementen.

Damit ist der Abstand zwischen benachbarten Hängetransportelementen basierend auf das Lichtmassminimum steuerbar.

Gemäss einer weiteren vorteilhaften Ausführungsform des Verfahrens ist vorgesehen, dass mindestens ein erfasster Abstand mit einem Sicherheitsfaktor angepasst wird.

Auch wenn die mindestens eine Steuerungseinheit eine grosse Anzahl der im vorher beschriebenen genannten Parameter berücksichtigen kann, um den optimalen Abstand zu bestimmen, ist es vorteilhaft, den optimierten Abstand mit einem Sicherheitsfaktor zu erhöhen, um unerwartete Kollisionen zwischen den Hängetransportelementen zu reduzieren und so die Gefahr von ihrem Verschleiss oder Beschädigung des Hängetransportguts zu verringern.

Darüber hinaus kann der Sicherheitsfaktor verwendet werden, um die Förderdichte des Hängeförderers zusätzlich anzupassen.

Beispielsweise kann der Sicherheitsfaktor bei Bedarf durch die Steuerungseinheit verringert werden, um die Förderdichte exzeptionell zu erhöhen (in diesen besonderen Fällen gegebenenfalls auch unter Unterschreitung des Lichtmassminimums), auch wenn dies zu einem statistisch erhöhten Ausfallrisiko führen könnte. Dieses Risiko ist dennoch vorteilhaft einsetzbar in Zeiten sehr starker Auslastung der Anlage, wie beispielsweise an Verarbeitungs-Spitzentagen oder -wochen, wenn eine übermässige hohe Anzahl von Hängefördergütern zu fördern ist und der geschaffene Leistungsvorteil das Ausfallrisiko überwiegt.

Gemäss einer weiteren vorteilhaften Ausführungsform des Verfahrens ist vorgesehen, dass mindestens eine Sensoreinrichtung vorhanden ist.

Mithilfe der mindestens einen Sensoreinrichtung ist das mindestens eine Lichtmass erkennbar, um Sensordaten für das Einstellen eines optimalen Abstands von benachbarten Hängetransportelementen zu erhalten.

Das Messen mindestens eines Lichtmasses ermöglicht ein Erkennen einer für den Abstand von benachbarten Hängetransportelementen indikativen Information, mit welcher in der mindestens einen Steuerungseinheit deren Abstand zueinander bestimmbar ist.

Vorteilhaft erkennt die mindestens eine Sensoreinrichtung eine dynamische Raumform der Hängetransportelemente.

Alternativ oder ergänzend wird vorteilhaft die dynamische Raumform der Hängetransportelemente von der Steuerungseinheit oder der ersten Rechnereinrichtung berechnet.

Die berechnete Raumgeometrie ermöglicht es, die Geometrie dieses Hängetransportelements einschliesslich seiner maximalen dynamischen Auslenkungen während der Förderung (inklusive seiner beigegebenen Waren bzw. seines Maximalvolumens), vorteilhaft mindestens dessen Schwenkbewegungen in und gegen die Förderrichtung, zu erfassen.

Alternativ oder ergänzend, erkennt die mindestens eine Sensoreinrichtung mindestens eine Position von mindestens zwei benachbarten Hängetransportelementen.

Das Erkennen der Position von mindestens zwei benachbarten Hängetransportelementen umfasst eine für den Abstand von benachbarten Hängetransportelementen indikative Information, mit welcher in der mindestens einen Steuerungseinheit deren Abstand zueinander einfach bestimmbar ist.

Ein dritter Aspekt der Erfindung betrifft ein Hängefördersystem mit mindestens einer erfindungsgemässen Abstandsoptimierungsvorrichtung.

Ein erfindungsgemässes Hängefördersystem umfasst mindesten eine erfindungsgemässe Abstandsoptimierungsvorrichtung, wobei die mindestens eine Abstandsoptimierungsvorrichtung nach einer Beladestation entlang mindestens einer Trajektorie angeordnet ist.

Es ist ebenfalls vorteilhaft die Abstandsoptimierungsvorrichtung hinter die Verdichtungsvorrichtung zu positionieren.

Die Abstandsoptimierungsvorrichtung ermöglicht es, die Abstände auf einen Wert im Hängefördersystem zu minimieren, um die Förderdichte zu erhöhen, und andererseits ausreichend grosse Abstände zu bestimmen, um Kollisionen zwischen einzelnen Hängetransportelementen zu vermeiden.

Gemäss einer weiteren vorteilhaften Ausführungsform ist vorgesehen, dass Betriebsparameter des Hängefördersystems an eine KI-Einheit gesendet werden.

Die KI-Einheit kann insbesondere dazu ausgebildet sein, Förderleistung und Wartung des Hängefördersystems zu optimieren.

Bei den Betriebsparametern handelt es sich insbesondere um die Anzahl der Hängetransportelemente, ihre Art, Transportzeiten und weitere dem Identifikationsmittel zugeordnete Daten wie die Zeit, die ein Hängetransportelement mit der Förderung von verschieden Hängetransportgütern verbringt, und seine kritische Betriebszeit, die die Zeit bestimmt, in der seine Wartung durchgeführt werden sollte. Zusätzliche Parameter können die Art der zu transportierenden Hängetransportgüter, ihr Gewicht und ihre Abmessungen sein. Dies ist besonders vorteilhaft, weil die KI-Einheit anhand dieser Parameter die Förderleistung des Hängeförderers, die kritische Betriebszeit des Hängetransportelements, die Planung der gesamten Wartung des Hängefördersystems oder beispielsweise den Verschleiss des Hängetransportelements optimieren kann.

Was den Verschleiss der Hängeförderer betrifft, so kann die KI-Einheit mit der Beladestation verbunden werden und optimieren, welche Hängetransportelemente mit welchen Hängefördergütern beladen werden sollen. Es gibt Hängefördergüter, die die Hängetransportelemente stärker verschleissen als andere, zum Beispiel solche mit scharfen Kanten. Daher ist es vorteilhaft, solche Hängefördergüter auf mehrere Hängetransportelemente zu verteilen, damit diese einer möglichst gleichmässigen Abnutzung unterliegen. Dies hat den positiven Effekt, dass einen übermässigen Verschleiss bestimmter Hängetransportelemente verhindert wird, die dann eine häufigere Wartung erfordern könnten, was wiederum zu häufigeren Systemausfällen führen kann.

Die KI-Einheit kann auch Voraussagen ermöglichen, wie lange es dauert, bis das Hängetransportelement an die Entladestation ankommt. Dies ist von Vorteil, wenn bestimmte Arten von Hängefördergütern, die schneller als andere transportiert werden müssen, Priorität haben sollen. In diesem Szenario lässt sich auch vorhersagen, welche Elemente angehalten oder verzögert werden sollten, um auf dem Hängeförderer Platz für die Hängetransportelemente mit höherer Priorität zu schaffen. Die Priorität sollte nicht nur als binäre Variable gesehen werden, bei der 0 für normale Priorität und 1 für erhöhte Priorität steht, sondern als eine Skala mit mehreren Stufen, z. B. von 0 bis 10, wobei 0 die niedrigste und 10 die höchste Priorität ist.

Die KI-Einheit kann auch dazu verwendet werden, den Abstand zwischen benachbarten Hängetransportelementen weiter zu optimieren. Alternativ oder ergänzend kann sie auch zur Optimierung des Sicherheitsfaktors in Abhängigkeit von der aktuellen Auslastung des Hängeförderers eingesetzt werden.

Es ist weiterhin vorteilhaft, einen digitalen Zwilling des Hängefördersystem mithilfe der ersten Rechnereinrichtung zu erstellen, was eine Systemsimulation erlaubt.

Ein digitaler Zwilling eines Hängeförderersystems ist entsprechend eine digitale Darstellung des physischen Fördersystems, die zur Visualisierung, Analyse und Optimierung der Leistung des Hängefördersystems verwendet wird. Der digitale Zwilling wird anhand der Daten des physischen Hängefördersystems erstellt, einschliesslich der Abmessungen, Komponentenspezifikationen und Betriebsparameter, und dient zur Simulation des Betriebs des Hängefördersystems unter verschiedenen Bedingungen und Szenarien.

Einer der Hauptvorteile eines digitalen Zwillings ist die bessere Visualisierung und das bessere Parametrisieren des physischen Hängeförderersystems. Durch die Erstellung einer 3D-Darstellung können Benutzer die verschiedenen Komponenten und ihre Beziehungen zueinander visualisieren und optimieren. Dies kann zudem bei der Fehlersuche, bei Schulungen und bei der Wartung nützlich sein. Ein weiterer Vorteil eines digitalen Zwillings ist seine Fähigkeit, mittels einer Simulation und Analyse das Hängefördersystem zu verbessern und zu kapazitätsmässig zu optimieren. Dies kann weiterhin dazu beitragen die Effizienz und Zuverlässigkeit des Hängefördersystems zu verbessern. Neben der Simulation und Analyse kann ein digitaler Zwilling auch zur Echtzeitüberwachung und -diagnose des Hängeförderersystems eingesetzt werden. Durch die Verknüpfung des digitalen Zwillings mit Sensoren und anderen Datenquellen können die Benutzer Echtzeitdaten über den Betrieb des Hängefördersystems erhalten. Dies kann dazu beitragen, Probleme und Leistungsengpässe schneller zu erkennen und zu beheben, sowie Ausfallzeiten und andere Störungen zu minimieren. Ein weiterer Vorteil des digitalen Zwillings ist seine Fähigkeit, die Zusammenarbeit zwischen den Bedienpersonen zu optimieren. Da der digitale Zwilling von mehreren Benutzern von verschiedenen Standorten aus zugänglich ist und gemeinsam genutzt werden kann, können die Teammitglieder effektiver zusammenarbeiten und fundiertere Entscheidungen über den Betrieb und die Optimierung von dem Hängefördersystem treffen. Schliesslich kann ein digitaler Zwilling auch zur Verbesserung der Zustandsüberwachung des Hängefördersystems eingesetzt werden.

Mittels des digitalen Zwillings ist es vorteilhaft möglich das Hängefördersystem umfassend mindestens eine Abstandsoptimierungsvorrichtung mit einer Software zu simulieren. Diese Simulation ist deshalb vorteilhaft, weil damit Daten über das gesamte Hängefördersystem gesammelt werden können, die das Training der KI-Einheit beschleunigen und verbessern können. In Abhängigkeit von diesen Betriebsparametern ist es dann möglich, die Leistung des Hängeförderers zu optimieren oder z.B. die optimale Förderstrecke, mit der Hängetransportelemente mit unterschiedlichen Prioritäten transportiert werden sollen. Mit diesen Daten kann dann die KI-Einheit nach dem Prinzip des überwachten Lernens als Ersatzmodell trainiert werden, das im Online-Betrieb verwendet werden kann, da Simulationsmodelle üblicherweise langsam sind.

Als alternative Lösung kann das Prinzip des bestärkenden Lernens eingesetzt werden, bei dem die Hängetransportelemente als Agenten und der Rest des Hängetransportsystems als Umwelt behandelt werden.

Die Agenten interagieren mit der Umwelt und versuchen, im Rahmen einer sogenannten Belohnungsfunktion die höchstmögliche Belohnung zu erzielen. In diesem Fall könnte die Belohnungsfunktion die maximale Förderdichte, die Minimierung des Wartungsbedarfs der verschiedenen Komponenten, und die effiziente Priorisierung der Hängetransportelemente sein.

Vorteilhaft ist das Hängefördersystem flexibel und modular gestaltet.

Ein flexibles Hängefördersystem ist eine Transport- und Logistiklösung, die so konzipiert ist, dass sie tragbar, vielseitig und einfach einzurichten ist, und in einer Vielzahl von Umgebungen eingesetzt werden kann. Das Hängefördersystem besteht aus einer Reihe von modularen Komponenten, einschliesslich Förderbändern, Trägern und Antriebssystemen, die ohne Spezialwerkzeug oder -ausrüstung leicht montiert und gegebenenfalls demontiert werden können. Einer der wichtigsten Vorteile eines flexiblen Hängefördersystems ist seine Transportfähigkeit. Das Hängefördersystem kann leicht an verschiedene Orte transportiert und vor Ort aufgebaut werden, was es auch für den Einsatz in temporären oder vorübergehenden Installationen tauglich macht. Durch die Verwendung von teleskopierbaren oder ausziehbaren Abschnitten oder verstellbaren Halterungen kann das Hängefördersystem je nach Bedarf umkonfiguriert werden, wobei das erfindungsgemässe Steuersystem die Optimierung der Förderdichte auch in diesen Fällen erlaubt.

Ein weiterer wichtiger Vorteil im Zusammenhang mit einem flexiblen Hängefördersystems sind die beschriebenen Steuerungs- und Automatisierungsfunktionen. Sensoren, Steuerungen und Software können eingesetzt werden, um eine automatische Streckenführung, Echtzeitüberwachung und -diagnose sowie die Verbindung mit anderen Logistiksystemen zu ermöglichen. Auf diese Weise kann der Förderer programmiert und an die spezifischen Anforderungen der jeweiligen Anwendung angepasst werden, was die Effizienz und Genauigkeit im Betrieb verbessert.

**Figurenbeschrieb**

Zum besseren Verständnis der vorliegenden Erfindung wird nachfolgend auf die Zeichnungen Bezug genommen. Diese zeigen lediglich Ausführungsbeispiele des Erfindungsgegenstands und sind nicht dazu geeignet, die Erfindung auf die hierin offenbarten Merkmale zu beschränken.

Für gleiche oder gleich wirkende Teile werden in den nachfolgenden Figuren und der dazugehörigen Beschreibung gleiche oder ähnliche Bezugszeichen verwendet.

Es zeigen:

Figur 1: Ein erfindungsgemässes Hängefördersystem in einer schematischen Draufsicht;

Figur 2: Ein erfindungsgemässes Hängefördersystem in einer schematischen Seitensicht;

Figur 3: Eine erfindungsgemässe Abstandsoptimierungsvorrichtung im Hängefördersystem gemäss Fig. 1 in einer schematischen Draufsicht;

Figur 4: Eine schematische Auf- und Seitensicht von Hängetransportelementen im Förder-Stillstand und eine schematische Seitensicht der Hängetransportelemente in Bewegung;

Figur 5: Eine Vielzahl von leeren Hängetransportelementen in einem Staubereich für ein Hängefördersystem gemäss der Fig. 1 in einer perspektivischen Ansicht;

Figur 6: Beladene Hängetransportelemente gemäss Fig. 4 oder Fig. 5 in einer schematischen Seitenansicht;

Figur 7: Ein Flussdiagramm des Verfahrens für ein erfindungsgemässes Hängefördersystem;

Figur 8: Eine schematische Draufsicht der Hängetransportelemente in einer Kurve;

Figur 9: Eine schematische Seitenansicht eines beladenen Hängetransportelements in verschiedenen Schwenkpositionen (a-c);

Figur 10 Eine schematische Seitenansicht von verbunden Hängetransportelementen in zwei verschieden Orientierungen; und

Figur 11 Eine schematische Seitenansicht von verbunden Hängetransportelementen in gleicher Orientierung.

**Ausführung der Erfindung**

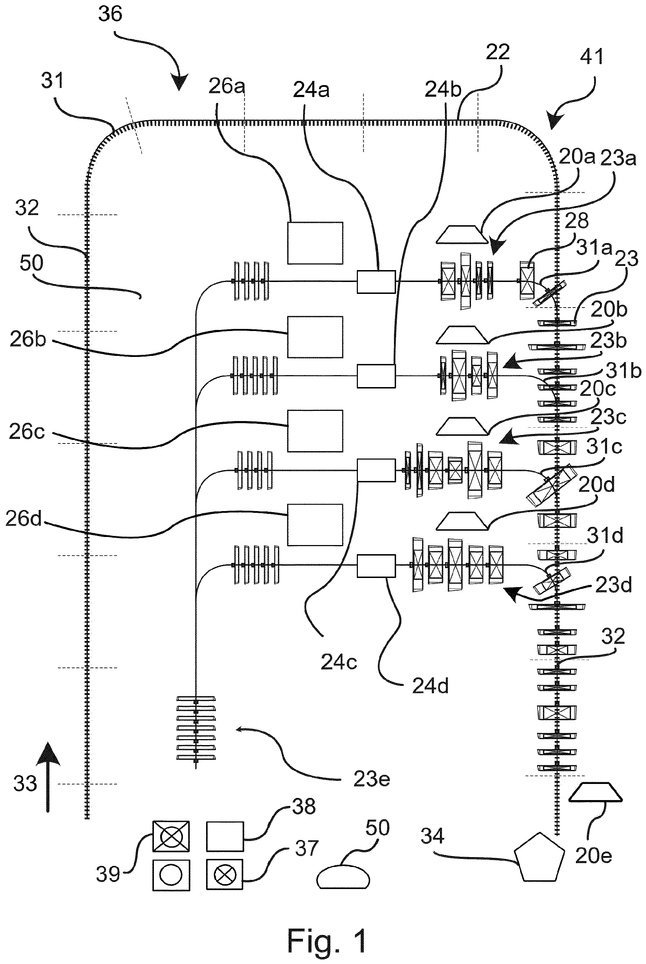

Figur 1 zeigt ein Hängefördersystem 36 mit seinen funktionalen Elementen in einer schematischen Draufsicht. Dieses Hängefördersystem 36 enthält einen Hängeförderer 22, wie beispielsweise aus der Hängeförderanlage gemäss CH714004A1 der hiesigen Anmelderin bekannt, der für den Transport von Hängetransportelementen 23 verwendet wird. Ferner ist der Hängeförderer 22 durch seine Fördergeschwindigkeit und Trajektorie 41 definiert. Der Förderprozess beginnt mit leeren Hängetransportelementen 23e, die zu vier separaten Beladestationen 26a-26d in einheitlichen Abständen, in Förderrichtung 33 transportiert sind. Dort werden sie mit verschieden Hängefördergütern 28 beladen. Wenn ein Hängefördergut 28 Kleidungselemente umfasst, werden diese auf einem Bügel transportiert, andernfalls in einer Transporttasche. Es sei erwähnt, dass der Beladungsprozess zu einer Veränderung der Grösse bzw. den Dimensionen der Hängetransportelemente 23 im Vergleich zu ihrem Leerzustand führt.

Beladene Hängetransportelemente 23 werden in gleichen oder unterschiedlichen Abständen von den Beladestationen 26a-26d freigegeben, wobei bereits dort Kollisionen zu vermeiden sind. Darüber hinaus wird die Art des Hängetransportelements 23 dabei berücksichtigt, das heisst, ob ein Hängetransportelement 23 ein Bügel oder eine Transporttasche ist. Danach werden optional die Abstände von Hängefördergütern 28 in den Hängetransportelementen 23 mittels Verdichtungsvorrichtungen 24a-24d optimiert (im Beispiel durch Bürsten oder Vibrieren verdichtet). Es könnte während der folgenden Förderung ansonsten geschehen, dass sich die Hängetransportgüter 28, die sich in, an oder auf Hängetransportelementen 23 befinden, sich räumlich bewegen, wodurch sich die Abstände zwischen benachbarten Hängetransportelementen verändern, was im Allgemeinen unerwünscht ist. Nach dieser Verdichtung erfolgt eine Abstandsanpassung, und zwar mittels Abstandsoptimierungsvorrichtungen 20a-20d.

In diesem Beispiel sind diese als Puffer- und Vereinzelungseinheiten mit Stopp-/Freigabeelementen implementiert, die von einer speicherprogrammierbaren Steuerungseinheit 39 (SPS) auf der Grundlage des von einer Kamera gemessenen und von einer Software bestimmten Mindestabstandswertes elektrisch gesteuert werden. Die Abstandsoptimierungsvorrichtungen 20a-20d geben die Hängetransportelemente 23a-23d gesteuert vereinzelt und mit vorgegebenen, für den stromabwärts folgenden Förderbereich optimierten Abständen ab. Da bei den verschiedenen Weichenstellen (Kurven 31a bis 31d) zusätzliche Hängetransporteinheiten 23 in den umlaufenden Hängeförderer 22 einsortiert werden, berücksichtigt die übergeordnete Steuerungseinheit 39 diese Gegebenheit und hält die erforderlichen Lücken bzw. Freipositionen bei der Abgabe von den Abstandsoptimierungsvorrichtungen 20a-20d frei.

Zusätzlich werden die beladenen Hängefördergüter 23 nach Beladestation priorisiert. So haben die Beladestationen 26a-26b eine höhere Priorität als die Beladestationen 26c-26d, so dass die in Hängetransportelementen 23a-23b beladenen Hängefördergüter der priorisierten Beladestationen 26a-26b schneller gefördert werden, weil die übrigen Beladestationen 26c-26d für sie Platz am Hängeförderer 22 freimachen. Dies erfolgt durch Anhalten der Hängetransportelemente 23c-23d. Die Einstellung und der Priorität erfolgt über eine KI-Einheit 50, die mit einer ersten Rechnereinrichtung 37 verbunden ist. Die KI-Einheit bestimmt welche Hängetransportelemente 23 angehalten oder beschleunigt werden sollen, damit die mit höherer Priorität früher befördert werden. Die Prioritäten der Hängetransportelemente können jederzeit angepasst werden.

Nachdem sich die Hängetransportelemente 23 entlang der Kurven 31a-31d weiterbewegt haben und sich im geraden Abschnitt 32 des Hängeförderers 22 befinden, werden sie erneut von einer anderen Abstandsoptimierungsvorrichtung 20e angepasst, um den Abstand in Bezug auf die weitere Trajektorie 41 zu optimieren und die Förderdichte des Hängeförderers 22 zu erhöhen oder gegebenenfalls zu reduzieren durch eine Vergrösserung der Abstände. Es zu erwähnen, dass aufgrund der Berücksichtigung der Trajektorie 41 des Hängeförderers 22 für die Abstandsanpassung, die bestimmten Abstände anders ausfallen würden, wenn sich hinter den Abstandsoptimierungsvorrichtung en 20a-20d (anders als hier vorgesehen) keine Kurven 31a-31d befinden würden. Schliesslich endet der Förderprozess an einer Entladestation 34, z.B. einem Verpackungs- oder Speditionsbereich.

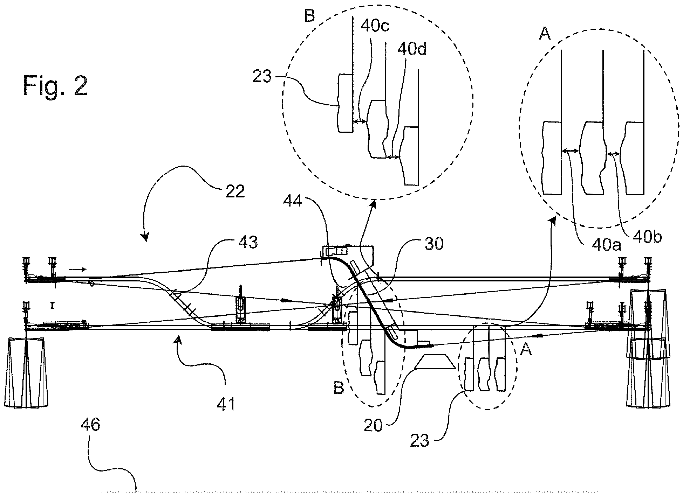

Figur 2 zeigt eine schematische Seitensicht eines erfindungsgemässen Hängeförderers 22. Insbesondere sind hier Hängetransportelemente 23 zu sehen, die sich entlang verschiedener Abschnitte einer Trajektorie 41 des Hängeförderers 22 bewegen. Zwei abgebildete Hängetransportelemente 23 sind Transporttaschen mit einem festen Boden und einem festen Rückenteil. Der Rest der Tasche ist aus einem flexiblen Material hergestellt, das sich der Form der in die Transporttasche geladenen Hängefördergüter 28 anpassen kann. Das dritte Hängetransportelement 23 ist so gestaltet, dass es ebenfalls eine Rückseite aus flexiblem Material hat. Darüber hinaus besteht die Trajektorie 41 in diesem Ausführungsbeispiel aus mehreren höhenveränderlichen Abschnitten 30, in denen die Hängetransportelemente 23 ihre Förderhöhe gegenüber dem Boden 46 (angedeutet durch die punktierte Linie in Figur 2) ändern. Diese sind realisiert durch einen Abstiegsabschnitt 43 und einen Anstiegsabschnitt 44.

Die beladenen Hängetransportelemente 23 auf einem geraden Abschnitt der Trajektorie 41 haben optimierte Abstände, die von einem gemessenem Lichtmass 42, einem bestimmten Lichtmassminimum 40a-40d, einer Geschwindigkeit und Beschleunigung des Hängeförderers, und einer Position des Hängetransportelements abhängig sind (siehe Lichtmassminima 40a, 40b in Blase A). Nichtsdestoweniger, wenn die Hängetransportelemente 23 in den Anstiegsabschnitt 44 der Trajektorie 41 eintreten, sollte der Abstand zwischen den Hängetransportelementen 23 erneut angepasst werden, da sich das Lichtmassminimum 40a-40d aufgrund der vertikalen Verschiebung der Hängetransportelemente 23 zueinander ändert (siehe geänderte Lichtmassminima 40c-40d in Blase B).

Diese Anpassung erfolgt mittels einer Abstandsoptimierungsvorrichtung 20. Darüber hinaus ist bei der Optimierung der Abstände auch das Schwanken der Hängetransportelemente 23 durch Einfahrt in den Anstiegsabschnitt 44 und deswegen Änderung der Trajektorie 41 berücksichtigt, und zwar mit einer ersten Rechnereinrichtung 37. Die beispielsweise als Arduino mit einer entsprechenden Software realisierte erste Rechnereinrichtung 37 multipliziert ebenfalls Abstände mit einem Sicherheitsfaktor von 1.15, vorzugsweise 1.15 bis 1.3, um das Risiko einer Kollision zu minimieren.

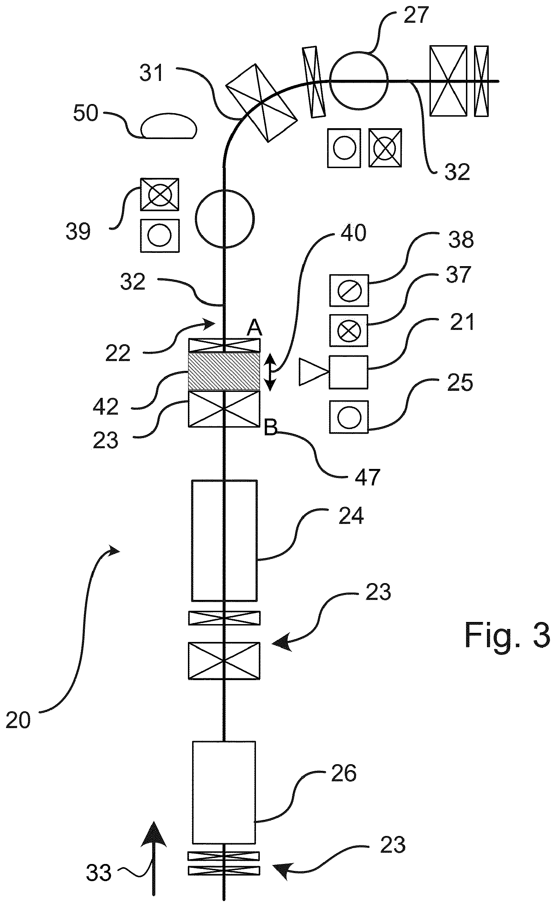

Figur 3 zeigt eine schematische Draufsicht einer Abstandsoptimierungsvorrichtung 20. Die Abstandsoptimierungsvorrichtung 20, die eine Sensoreinrichtung 21, eine Steuerungseinheit 39 und ein Abstandanpassungselement 27 enthält, dient erfindungsgemäss als Zusatzausstattung eines Hängeförderers 22. Die Steuerungseinheit 39 ist ausgebildet, das mindestens eine Abstandanpassungselement 27 auf Basis von Messungen der mindestens einen Sensoreinrichtung 21 des freien Raums zwischen zwei benachbarten Hängetransportelementen 23 zu steuern, so dass der Abstand zwischen den benachbarten Hängetransportelementen 23 anpassbar und parametrisiert eingestellt wird. Der Hängeförderer 22 ist hier ebenfalls mit einer Verdichtungsvorrichtung 24 ausgerüstet. Der Förderprozess, dessen Förderrichtung 33 durch einen Pfeil bestimmt ist, beginnt an einer Beladestation 26, wo zwei leere Hängetransportelemente 23 mit Hängetransportgütern 28 beladen werden. Durch die Beladung verändern sich daraufhin die Abmessungen der Hängetransportelemente 23 und damit das Lichtmass 42 zwischen diesen (als Schraffur angedeutet). Ein Lichtmassminimum 40 zwischen benachbarten Hängetransportelementen 23 wird hier ebenfalls bestimmt. Dieses Lichtmass 42 ist mittels der Sensoreinrichtung 21 gemessen, die in diesem Ausführungsbeispiel als Kamera ausgeführt ist. Die Messung gilt als eine Eingabe in eine zweite Rechnereinrichtung 38, die aus dem gemessenen Lichtmass 42 das Lichtmassminimum 40 bestimmt. Darüber hinaus ist die zweite Rechnereinrichtung 38 als Rechner mit einer entsprechenden Software ausgeführt. Das bestimmte Lichtmassminimum 40 gilt als der Abstand zwischen den beiden benachbarten Hängetransportelementen 23 und ist optimiert, nämlich mittels einer ersten Rechnereinrichtung 37, die neben der dynamischen Raumform der beiden Hängetransportelemente 23 zusätzliche Parameter wie Geschwindigkeit der Hängetransportelemente 23, eine Trajektorie 41 des Hängeförderers 22 und Positionen der Hängetransportelemente 23 auf der Trajektorie 41 berücksichtigt. In diesem Fall ist insbesondere eine Kurve 31 berücksichtigt und die Abstände mit Blick auf diese entsprechend optimiert, wobei das Ziel darin besteht, einerseits die Förderdichte zu erhöhen und andererseits das Kollisionsrisiko zwischen den benachbarten Hängetransportelementen 23 zu verringen oder auszuschliessen. Ferner sei angemerkt, dass die Optimierung den Abstand zwischen benachbarten Hängetransportelementen 23 in Abhängigkeit der erwähnten Parameter gesteuert sowohl vergrössern als auch verkleinern kann. Ein Teil der Optimierung ist auch die optionale Multiplikation des Abstands mit einem Sicherheitsfaktor von 1.1.

Wenn mittels der Sensoreinrichtung 21 die dynamische Raumform direkt gemessen (und nicht durch die Steuerungseinheit 39 oder die Rechnereinheiten 37, 38 berechnet werden soll), kann die Messanordnung gezielt in einem kritischen Förderbereich angeordnet werden, wo Eigenbewegungen des Hängetransportelements 23 auftreten oder eine entsprechend besondere Trajektorie 41 vorhanden ist. Alternativ können an einer definierten Messstelle gezielt verschiedene Eigenbewegungen des Hängetransportelements 23 ausgelöst werden, um die zu messenden Parameter der dynamischen Raumform dort zu ermitteln bzw. aufgrund der Dynamik zu bestimmen. Zu diesem Zweck kann als Sensoreinrichtung 21 vorteilhaft ein oder mehrere Lichtmessgitter vorgesehen werden, ein Ultraschalls-Distanzsensor oder auch ein 3D-Laserscanner, der die Extremwerte bzw. die maximalen Auslenkungen des zum messenden Hängetransportelements erfasst.

Gleichzeitig mit dem Bestimmen des Abstands zwischen benachbarten Hängetransportelementen 23 ist hier jedem Hängetransportelement 23 ein Identifikationsmerkmal 47 mittels eines Identifikationsmittels 25 vergeben. Im Ausführungsbeispiel ist jedes Hängetransportelement 23 mit einem RFID-Tag gekennzeichnet, der vom Identifikationsmittel 25 gelesen wird. Ein eindeutiges Identifikationsmerkmal 47 ist dann auf diesen RFID-Tag hochgeladen. Somit ist das erste Hängetransportelement entlang des Hängeförderers 22 als A, und das zweite als B markiert. Darüber hinaus sind zu jedem dieses Identifikationsmerkmals 47 Abstände zu einem vor- und nachlaufenden Händetransportelement 23 zugeordnet. Entsprechend ist die digitale Information des ersten Hängetransportelements 23 (mit Beispielmassen) wie folgt:

Identifikationsmerkmal 47: A, Abstand zum vorlaufenden Hängetransportelement 23: 0 mm, Abstand zum nachlaufenden Hängetransportelement 23 250 mm.

Der Abstand zum vorlaufenden Hängetransportelement 23 ist 0 mm, weil es das erste Hängetransportelement 23 ist. Diese Information ist auf der Steuerungseinheit 39 gespeichert, so dass sie bei Bedarf immer abgerufen werden kann. Die Information über den Abstand zu benachbarten Hängetransportelementen 23 erhält auch eine hier als Speicherprogrammierbare Steuerung (SPS) ausgeführte Steuerungseinheit 39. Ausserdem verfügt sie über die Information, auf welchen Wert der Abstand zwischen benachbarten Hängetransportelementen 23 des Hängeförderers 22 angepasst werden soll, der in diesem Ausführungsbeispiel 300 mm ist. Dieser Wert hängt, wie bereits erwähnt, von der Position des Hängetransportelements 23 auf der Trajektorie 41 des Hängeförderers 22 und seiner Geschwindigkeit ab und ist mittels der ersten Rechnereinrichtung 37 bestimmt. Ferner ist es zu beachten, dass die kritische Kurvendistanz 49 zwischen benachbarten Hängetransportelementen 23 aufgrund ihrer gegenseitigen Drehung 250 mm beträgt.

Das von der speicherprogrammierbaren Steuerung gesteuerte Abstandanpassungselement 27 ist als Druckluftzylinder mit einer mechanischen Bremse ausgeführt, die Hängetransportelemente 27 entweder anhält und in angemessenen Zeitintervallen wieder freigibt oder um eine bestimmte Distanz verschiebt, so dass die Abstände auf ihre optimierte Werte gesteuert geändert werden. Somit sollte der Abstand zwischen benachbarten Hängetransportelementen 23 in diesem Beispiel um 50 mm von 250 auf 300 mm vergrössert werden. Da die Geschwindigkeit des zweiten Hängetransportelements 23 350 mm/s beträgt, ist das zweite Hängetransportelement 23 0.14 Sekunden lang mittels der mechanischen Bremse gehalten, so dass der Abstand zwischen ihnen auf 300 mm vergrössert ist.

Nach der Kurve 31 erfolgt eine nächste Abstandsoptimierung, die nun ohne Messungen erfolgt, denn dank den in der Steuerungseinheit 39 (oder alternativ auch der Rechnereinrichtung) gespeicherten Informationen sind die aktuellen Abstände zwischen den benachbarten Hängetransportelementen 23 bekannt. Da sich die Hängetransportelemente 23 nun im geraden Abschnitt 32 der Trajektorie 41 des Hängeförderers 22 mit einer Geschwindigkeit von 350 mm/s befinden, bestimmt die erste Rechnereinrichtung 37, dass der optimierte Abstand, bei dem die Förderdichte erhöht, aber gleichzeitig das Risiko von Kollisionen zwischen benachbarten Hängetransportelementen 23 minimiert ist, 250 mm beträgt. Zudem berechnet sie, dass der mittels der speicherprogrammierbaren Steuerungseinheit 39 gesteuerte Druckluftzylinder das zweite Hängetransportelement 23 um 50 mm verschieben sollte, so dass der Abstand von 300 mm auf 250 mm reduziert ist. Schliesslich wird die optimale Wartung der Hängetransportelemente 23 durch eine KI-Einheit 50 optimiert, und zwar in Abhängigkeit von den in den einzelnen Hängetransportelementen 23 beförderten Hängetransportgütern 28. So befördert das Hängetransportelement 23 A beispielsweise Hängetransportgüter 28 mit scharfen Kanten, Hängetransportelement 23 B dagegen nicht. Bei der nächsten Beladung wird die KI-Einheit 50 daher versuchen, potenziell scharfkantige Hängetransportgüter 28 in das Hängetransportelement 23 B zu laden. Dies führt zu einer gleichmässigen Verteilung des Verschleisses der Hängetransportelemente 23 und zu einem kleineren Risiko eines Ausfalls des gesamten Hängefördersystems 36 infolge einer Beschädigung oder Zerstörung des Hängetransportelements 23.

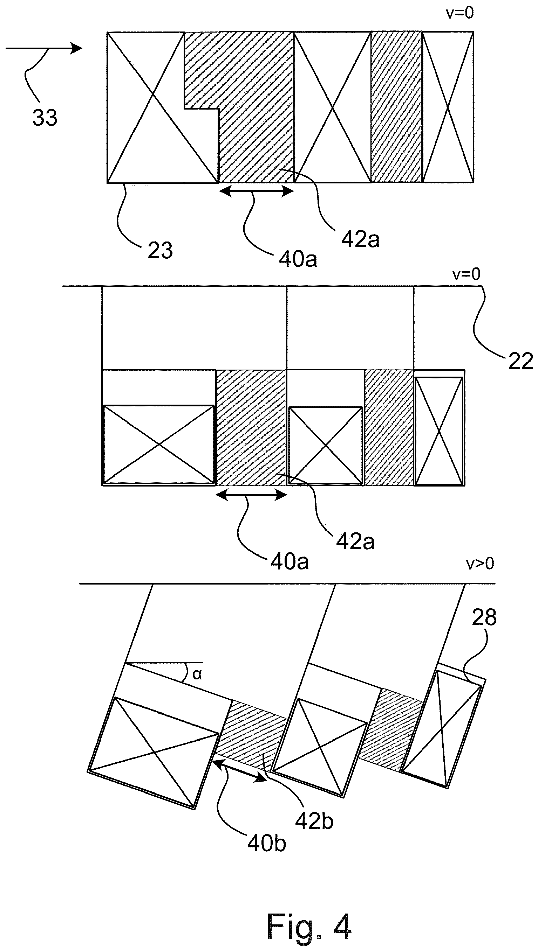

Figur 4 zeigt eine schematische Drauf- und Seitensicht der Hängetransportelemente 23 in Stillstand und eine schematische Seitensicht der Hängetransportelemente 23 in Bewegung. Die Förderrichtung 33 eines Hängeförderers 22 ist durch einen Pfeil gekennzeichnet. Darüber hinaus sind die Lichtmasse 42a, 42b zwischen benachbarten Hängetransportelementen 23 mit einer Schraffur veranschaulicht.

Das Lichtmassminimum 40a gilt als ein minimaler Lichtmasswert bzw. Mindestwert-Abstand zwischen zwei benachbarten Hängetransportelementen 23 und ist vorliegend als Abstand bezeichnet, der weiter optimiert ist. In der Seitenansicht ist zu erkennen, dass eine Sensoreinrichtung 21 (hier nicht gezeigt), in diesem Fall die Kamera, aufgrund einer Blickrichtung von vorne nur einen Teil des Lichtmasses 42a zwischen benachbarten Hängetransportelementen misst. Da jedoch ein Lichtmassminimum 40a gesucht ist, spielt dies vorliegend keine Rolle. Es ist wichtig zu erwähnen, dass die ersten beiden Ansichten Hängetransportelemente 23 abbilden, die hier eine Geschwindigkeit von Null haben und demzufolge das Lichtmass 42a zwischen ihnen eine statische Raumform besitzt. Dies ändert sich in der dritten schematischen Seitenansicht, wo die Geschwindigkeit der Hängetransportelemente 23 grösser als Null ist. Dadurch ist eine Neigung der Hängetransportelemente 23 verursacht, was auch zu einem verformten Lichtmass 42b führt, das nun eine dynamische Raumform berücksichtigt. Die Neigungsrate ist durch den Alphawinkel definiert und wirkt sich auf das Lichtmassminimum 40b nach folgender Gleichung aus:

$$40b = 40a * \text{Funktion von } \cos(\text{Alpha})$$

Aus dieser Gleichung ergibt sich, dass das Lichtmassminimum 40b umso kleiner ist, je grösser der Alphawinkel ist, der regelmässig mit steigender Geschwindigkeit zunimmt. Für den Fachmann ist es ersichtlich, dass diese Gleichung vorteilhaft weitere oder auch alternative Funktionsparameter (wie insbesondere die Beschleunigung oder konvexe Flächenbereiche) berücksichtigen kann, welche die Berechnung des Lichtmassminimums 40b erlaubt, womit eine noch genauere Bestimmung der Lichtmassminima möglich ist. Die Formel lautet diesfalls 40b = 40a * Funktion(mindestens ein Lichtmass- oder Lichtmassminimum-Parameter). Unter Berücksichtigung dieser Tatsache ist es möglich, die dynamische Form des Lichtmasses 42b zu messen und daraus sein Lichtmassminimum 40b zu bestimmen, das dann gegebenenfalls in Abhängigkeit von der Geschwindigkeit der Hängetransportelemente 23 berechnet werden kann, was die Förderdichte des Hängeförderers 22 erhöht, denn sie müssen nicht angehalten werden.

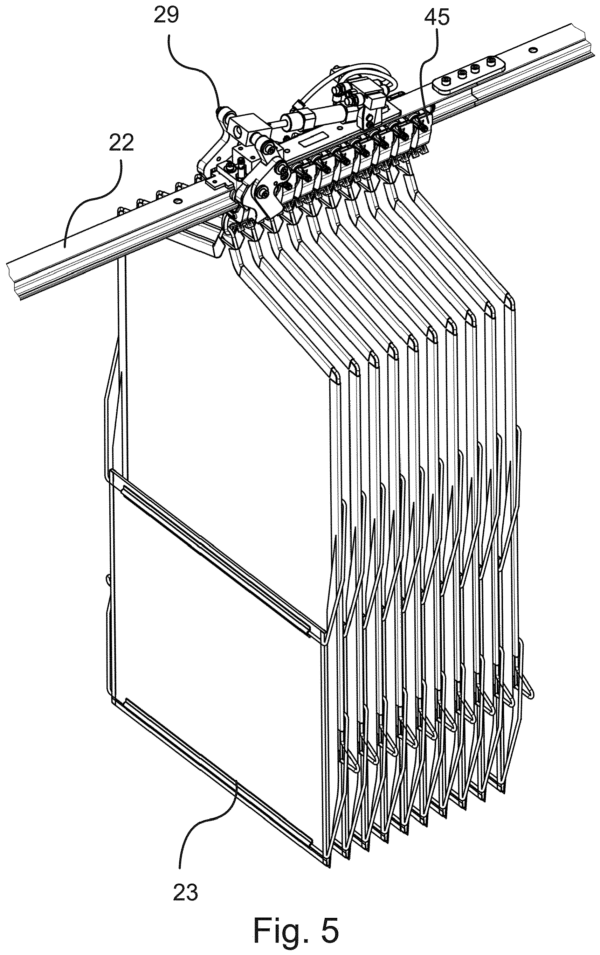

Figur 5 zeigt eine Mehrzahl von leeren Hängetransportelementen 23. Die abgebildeten Hängetransportelemente 23 sind leer und enthalten somit keine Hängefördergüter 28.

Darüber hinaus sind sie mit einem Hängeförderer 22 über einen Förderelemente 45 förderbar verbunden. Über dem Hängeförderer ist ein Vereinzelungselement 29 erkennbar mit einem Stoppelement, wie es dem Fachmann bekannt ist, und welches eine Pufferung und Freigabe der Hängetransportelemente erlaubt.

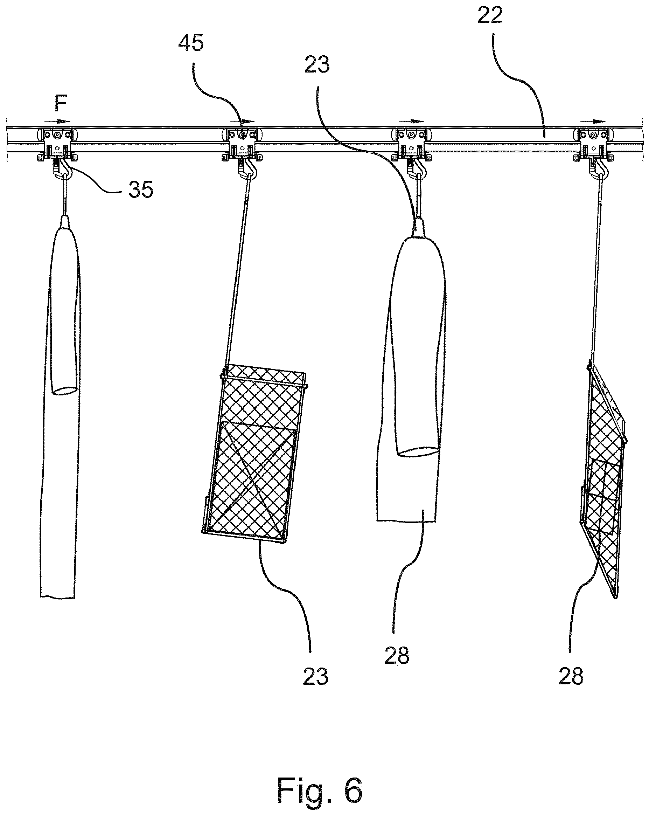

Figur 6 zeigt eine schematische Seitensicht von beladenen Hängetransportelementen 23, die als entweder als Transporttaschen oder als Bügel dargestellt sind. Daher können die Hängetransportelemente 23 für den Transport von verschiedenen Hängefördergütern 28, wie beispielsweise Waren und Kleidung, mittels des Hängeförderers 22 eingesetzt werden. Ferner sind die Hängetransportelemente 23 über eine Förderelement 45 mit dem Hängeförderer 22 förder- bzw. transportierbar verbunden. Die Förderrichtung 33 ist in Richtung der Pfeile F. Die Hängefördergüter 28 bzw. Hängetransportelemente 23 sind über Adapterelemente 35 mit den Förderelementen 45 lösbar verbunden. In diesem Ausführungsbeispiel sind die Adapterelemente 35 als Ösen ausgebildet, in welche Kleiderbügel oder die gezeigten Hängefördertaschen eingehängt sein können. Wenn direkt Hängeförderwaren an die Adapterelemente 35 angekoppelt werden, sind erstere zusammen mit der Ware als Hängetransportelemente 23 zu verstehen.

Die Adapterelemente 35 sind vorteilhaft steuerbar, so dass sie bei gewünschten Bearbeitungsschritten die Freigabe geförderter Waren oder aber auch in Störsituationen die Abgabe der Waren ermöglichen. Die Steuerung kann über die Steuerungseinheit 39 erfolgen oder auch örtlich durch Steuerkurven oder lokale Steuereinheiten. Besonders vorteilhaft ist es, wenn zur örtlichen Optimierung des Förderabstands eine Freigabe durch die Steuerungseinheit 39 möglich ist. Auf diese Weise können z.B. leere Hängefördertaschen oder andere Hängetransportelemente 23 entlang einer Förderstrecke abgegeben werden und dadurch eine zusätzliche Erhöhung der Förderdichte erreicht werden. Der Abstand kann auf diese Weise reduziert werden, indem der Abstand der bezüglich der abgegebenen Hängetransportelemente 23 vor- und nachlaufenden Hängetransportelemente 23 gesteuert verkleinert wird. Dieser Effekt kann selbst dann vorteilhaft genutzt werden, wenn Förderelement 45 ohne Transportgut zwischen diesen liegen, da die Dimensionen der Förderelemente 45 gegenüber den Hängetransportelementen 23 oder Waren in der Regel vergleichsweise klein sind. In danach folgenden Förderbereichen können diese Adapterelemente 35 wieder bestückt werden.

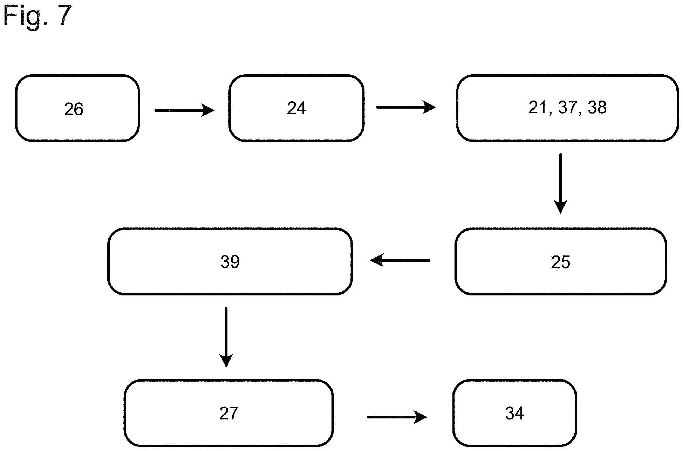

Figur 7 zeigt ein Flussdiagramm des Verfahrens von Hängetransportelementen 23. Das Verfahren beginnt an einer Beladestation 26, wo Hängetransportelemente 23 mit Hängefördergütern 28 beladen werden. Danach kann eine hier dargestellte Verdichtungsvorrichtung 24 vorgesehen sein, mit der die Positionen der Güter in den Hängetransportelementen 23 beeinflusst und optimiert werden.

Ein Lichtmass 42 zwischen benachbarten Hängetransportelementen 23 wird danach mit einer Sensoreinrichtung 21 gemessen und mittels einer zweiten Rechnereinrichtung 38 wird ein Lichtmassminimum 40 als optimierter Abstand zwischen benachbarten Hängetransportelementen 23 bestimmt. Zusätzlich ist eine erste Rechnereinrichtung 37 vorhanden, die den Abstand zwischen benachbarten Hängetransportelementen 23 in Abhängigkeit von einer Trajektorie 41 des Hängeförderers 22 und von Geschwindigkeit der Hängetransportelemente 23 bei Bedarf zusätzlich optimiert.

Darüber hinaus ist jedem Hängetransportelement 23 optional mindestens ein Identifikationsmerkmal 47 mittels eines Identifikationsmittels 25 zugeordnet. Der bestimmte Abstand wird dann mit Hilfe eines Abstandanpassungselements 27 optimiert, das von einer Steuerungseinheit 39 gesteuert wird. Schliesslich wird das gesamte Verfahren bei einem Endpunkt, hier einer Entladestation 34, abgeschlossen.

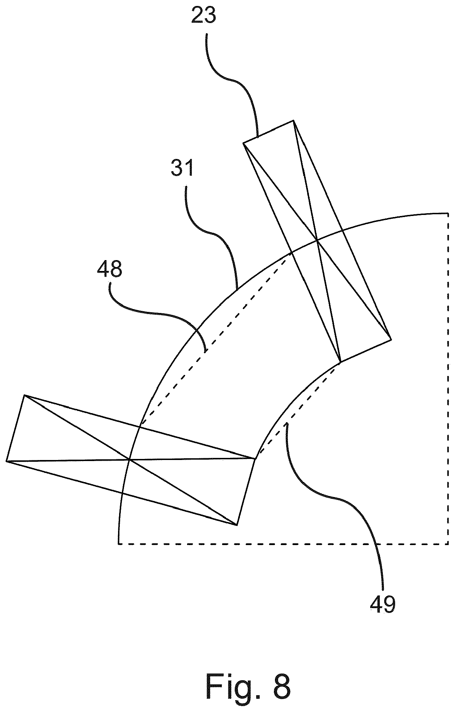

Figur 8 zeigt eine schematische Draufsicht der Hängetransportelemente 23 in einer Kurve 31. Der Kurvenabstand 48 entspricht einem von einer zweiten Rechnereinrichtung 38 und aus einem geraden Abschnitt 32 bestimmten Lichtmassminimum 40, das weiter von einer ersten Rechnereinrichtung 37 optimiert worden ist. Dabei ist es zu beachten, dass durch die gegenseitige Verdrehung der Hängetransportelemente 23 diese auf einen Wert nahegebracht werden, der kleiner als der Kurvenabstand 48 ist. Dieser Wert ist als kritische Kurvendistanz 49 bezeichnet und ist von der zweiten Rechnereinrichtung 38 bei dem Bestimmen eines optimierten Abstands in der Kurve 31 berücksichtigt worden, da in dieser kritischen Kurvendistanz 49 die Hängetransportelemente 23 am nächsten beieinander liegen und somit hier die grösste Kollisionsgefahr besteht.

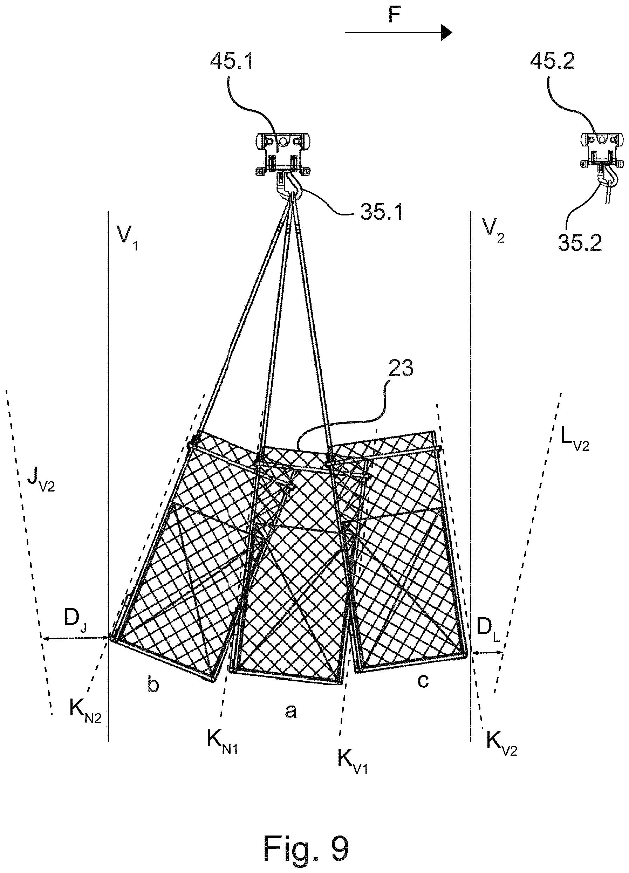

Anhand von Figur 9 wird die oben erwähnte dynamische Raumform und deren Nutzung für die erfindungsgemässe Steuerungseinheit 39 näher erläutert. Ein erstes Hängetransportelement 23 ist, gefördert an einem ersten Förderelement 45.1, erkennbar. In einer (statischen) Hängelage nimmt dieses Hängetransportelement 23 die Position a ein, d.h. dessen Schwerpunkt (inklusive etwaiger darin geförderten Waren) liegt im Wesentlichen vertikal unter dem Adapterelement 35.1. Mittels Sensoren, vorbekannten (historischen Daten) oder aufgrund von Default-Werten gemäss Datenbankwerten wird die maximale Vorlauf-Schwenkposition des Hängetransportelements in Förderrichtung F bestimmt. Diese Position ist mit c markiert. In analoger Weise wird die maximale Nachlauf-Schwenkposition, die hier mit b bezeichnet ist, bestimmt.

Die Extremwerte der Nachlauf-Schwenkposition, die hier mit der gestrichelten Hilfsebene $K_{N2}$ angedeutet ist, werden mit Referenz zu einer vertikal verlaufenden, senkrecht zur Förderrichtung F stehenden Ebene $V_1$ bzw. für die Vorlauf-Schwenkposition bzw. der Hilfsebene $K_{V2}$ mit Referenz zu einer entsprechenden, senkrechten und ebenfalls senkrecht zur Förderrichtung F stehenden Ebene $V_2$ bestimmt. Bei diesem Modellbeispiel sind die beiden Hilfsebenen $K_{V1}$ und $K_{V2}$ senkrecht zu einer in Förderrichtung verlaufenden Vertikalebene angeordnet. Die dynamische Raumform umfasst bei diesem typischen Beispiel den Raumbereich zwischen den Hilfsebenen $V_1$ und $V_2$, wobei der Raum in vertikaler Richtung selbstredend nur zu berücksichtigen ist für die Höhe des Hängetransportelements 23 bzw. in jedem Fall maximal vom Bereich des Adapterelements 35.1 bis zum tiefstliegenden Bereich des Hängetransportelements 23.

Es ist für den Fachmann gut ersichtlich, dass die Extremwerte (vor- und nachlaufend) nicht nur für das hier gezeigte Schwenken, sondern auch für ein Verdrehen oder Wippen in entsprechender Weise bestimmt werden können. Diesfalls stehen die Hilfsebenen $K_{V1}$ und $K_{V2}$ nicht mehr senkrecht zu einer in Förderrichtung F verlaufenden Vertikalebene, sondern sie sind zur Bestimmung dieser Extremwerte in zwei Richtungen geometrisch um einen Winkel verdreht. Es werden für solche Verdrehbewegungen somit in analoger Weise die Extremwerte in Förderrichtung (vor- und nachlaufend) bestimmt. Auf diese Weise entsteht eine räumlich nicht mehr im Wesentlichen quaderförmige dynamische Raumform, sondern diese ist durch die zusätzliche Geometriebestimmung komplexer. Je nach Rechenleistung der Steuerungseinheit 39 bzw. der vorhandenen Datenbasis können auf diese Weise sämtliche Raumbewegungen eines Hängetransportelements 23 berechnet bzw. bestimmt werden. Wenn Schwenk-, Wipp- und Verdrehbewegungen neben der hier gezeigten Schwenkbewegung zur Bestimmung der Extremwerte berücksichtigt werden, wird die Raumform für den Fachmann gut ersichtlich in Vor- und Nachlaufrichtung nicht mehr durch zwei Ebenen $V_1$, $V_2$, sondern durch gekrümmte oder geknickte Flächen begrenzt. Der so ermittelte dynamische Raumbereich umschliesst somit ein räumlich begrenztes Volumen, wobei zur Optimierung der Förderdichte nur die Begrenzungsflächen in vor- und nachlaufender Richtung zu beachten sind. Im einfachsten Fall sind dies, wie im Beispiel gezeigt die beiden begrenzenden Ebenen $V_1$, $V_2$.

Wie aus der Figur 9 weiterhin ersichtlich ist, wird für ein zweites stromabwärts gefördertes Hängetransportelement 23, das an einem hier gezeigten Adapterelement 35.2 gefördert wird, in entsprechender Weise dessen dynamische Raumform ermittelt. Deren nachlaufende Begrenzung ist hier durch die Hilfsebene $L_{V2}$ angedeutet. Und in gleicher Weise wird die dynamische Raumform für ein stromaufwärts (hier nicht gezeigtes) Hängetransportelement bestimmt. Für diese benachbarten beiden Hängetransportelemente 23 wird nun je der in Förderrichtung F minimale erforderliche Abstand berechnet (Lichtmassminimum), welcher hier mit den beiden Doppelpfeilen $D_L$ und $D_J$ markiert ist. Auf diese Weise können störende Kollisionen der Hängetransportelemente 23 vermieden und die Förderdichte optimiert werden.

Diesem Abstand kann bei besonderen Anwendungen ein Sicherheitswert hinzugerechnet werden. Die entsprechenden Werte werden von der Steuerungseinheit 39 oder der Rechnereinrichtung 37 aus den Messdaten der Sensoreinrichtung und/oder weiterer Steuerungsinformationen (z.B. historischen Daten oder vorteilhaft Default-Daten für die Hängetransportelemente) berechnet.

Die Steuerung bestimmt somit wie beschrieben, die dynamische Raumform für ein erstes Hängetransportelement 23, sowie für dessen benachbarten Hängetransportelemente 23 (vor- und nachlaufend) und ermittelt dann (für den in vertikaler Richtung zwischen dem Adapterelement 35 und dem tiefstliegenden Bereich der jeweiligen Hängetransportelemente 23) den minimalen Abstand $D_L$ und $D_J$ (Lichtmassminimum 40) zwischen diesen unter Berücksichtigung der sich je gegenüberliegenden vor- und nachlaufenden Flächen der dynamischen Raumform. Aufgrund des so errechneten Minimalabstands zwischen je zwei benachbarten Hängetransportelementen 23 wird der Abstand zwischen diesen bzw. zwischen den jeweiligen Fördereinheiten 45.1 und 45.2 eingestellt. Wie erwähnt, kann den Werten $D_L$ und $D_J$ ein Sicherheitswert (Toleranz) hinzugerechnet werden.

Damit wird ersichtlich, dass die dynamische Raumform die Geometrie des Hängetransportelements 23 einschliesslich seiner maximalen Auslenkungen, vorteilhaft die Schwenkbewegungen in und gegen die Förderrichtung F, umfasst. Die Aussenfläche der so bestimmten dynamischen Raumform für je zwei benachbarte Hängetransportelemente 23 definiert das Lichtmass 42 zwischen diesen. Das Lichtmassminimum 40 für die benachbarten Hängetransportelemente 23 kann auf diese Weise bestimmt und zudem in Abhängigkeit der jeweiligen stromabwärts liegenden Abschnitte der jeweiligen Förderstrecken optimiert werden.

Es ist bei weniger komplexen Gegebenheiten alternativ auch möglich, das Lichtmass 42 zwischen benachbarten statischen, d.h. sich nicht bewegenden, Hängetransportelementen 23 mittels einer Sensoreinrichtung 21 nur an einer oder wenigen (typischerweise meistauslenkenden) Stellen im Mitten- oder Bodenbereich von Hängetransportelementen 23 zu messen und diesen (approximativen) Wert für den minimalen Abstand als Lichtmassminimum 40 zu nutzen.

In alternativen Ausführungsformen kann in weiterer Vereinfachung der Abstand zwischen den Förderelementen 45 oder der Adapterelemente 35 vor einer Abstandsoptimierungsvorrichtung 20 gemessen werden und deren Abstand gestützt auf Datenbankwerte zum Lichtmass 42 zur Förderung angepasst und so parametrisiert eingestellt werden.

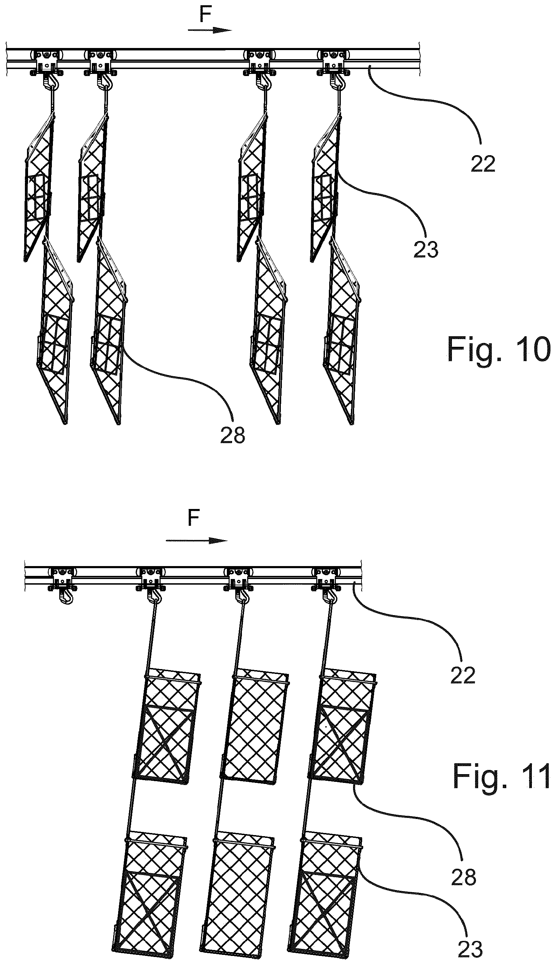

Figuren 10 und 11 zeigen die Verbindung der Hängetransportelemente 23, die in zwei Reihen aufgehängt sind. Bei der ersten, in Figur 10 dargestellten Variante hat jede Reihe der Hängetransportelemente 23 eine andere Ausrichtung, während in Figur 11 diese Ausrichtung für beide Reihe der Hängetransportelemente 23 gleich ist.

## Patentansprüche

1. Abstandsoptimierungsvorrichtung (20, 20a-20e) für Hängetransportelemente (23, 23a-23e), insbesondere eines Hängeförderers (22), umfassend:

- mindestens eine Sensoreinrichtung (21),
- mindestens ein Abstandanpassungselement (27), und
- mindestens eine Steuerungseinheit (39);

**dadurch gekennzeichnet, dass** die mindestens eine Steuerungseinheit (39) ausgebildet ist, das mindestens eine Abstandanpassungselement (27) auf Basis von Messungen der mindestens einen Sensoreinrichtung (21) des freien Raums zwischen zwei benachbarten Hängetransportelementen (23, 23a-23e) zu steuern, so dass der Abstand zwischen den benachbarten Hängetransportelementen (23, 23a-23e) anpassbar und parametrisiert eingestellt wird.

2. Abstandsoptimierungsvorrichtung nach Anspruch 1, wobei die mindestens eine Sensoreinrichtung (21) ausgebildet ist, mindestens ein Lichtmass (42, 42a, 42b) zwischen benachbarten Hängetransportelementen (23, 23a-23e) zu messen, und/oder die mindestens eine Sensoreinrichtung (21) ausgebildet ist, mindestens eine Position von mindestens zwei benachbarten Hängetransportelementen (23, 23a-23e) und/oder Förderelementen (45) zu bestimmen.

3. Abstandsoptimierungsvorrichtung nach Anspruch 2, wobei ein Lichtmassminimum (40, 40a-40d) zwischen benachbarten Hängetransportelementen (23, 23a-23e) ein Mindestwert-Abstand zwischen diesen benachbarten Hängetransportelementen (23, 23a-23e) ist.

4. Abstandsoptimierungsvorrichtung nach einem der vorgenannten Ansprüche, wobei mindestens eine Verdichtungsvorrichtung (24, 24a-24d) vorhanden ist, die optional vor der mindestens einen Sensoreinrichtung (21) entlang einer Förderrichtung (33) des Hängeförderers (22) positioniert ist.

5. Abstandsoptimierungsvorrichtung nach einem der vorgenannten Ansprüche, wobei mindestens ein Identifikationsmittel (25) vorhanden ist, und wobei das mindestens eine Identifikationsmittel (25) entlang der Förderrichtung (33) des Hängeförderers (22) mindestens einem Hängetransportelement (23, 23a-23e) oder Förderelement (45) mindestens ein Identifikationsmerkmal (47) zuweist.

6. Abstandsoptimierungsvorrichtung nach Anspruch 5, wobei das mindestens eine Identifikationsmittel (25) mindestens einem Identifikationsmerkmal (47) des Hängetransportelements (23, 23a-23e) oder Förderelement (45) einen Abstand zu mindestens einem benachbarten Hängetransportelement (23, 23a-23e) zuordnet.

7. Abstandsoptimierungsvorrichtung nach einem der vorgenannten Ansprüche, wobei mindestens ein Abstand, insbesondere das Lichtmassminimum (40, 40a-40d), zwischen benachbarten Hängetransportelementen (23, 23a-23e) und/oder Förderelementen (45) von einer Trajektorie (41) des Hängeförderers (22) abhängig ist.

8. Abstandsoptimierungsvorrichtung nach einem der vorgenannten Ansprüche, wobei eine erste Rechnereinrichtung (37) vorhanden ist, welche insbesondere ausgebildet ist, mindestens einen optimierten Abstand basierend auf der Trajektorie (41) des Hängeförderers (22) und/oder eine Geschwindigkeit mindestens eines Hängetransportelements (23, 23a-23e) zu berechnen.

9. Abstandsoptimierungsvorrichtung nach einem der vorgenannten Ansprüche, wobei die mindestens eine Sensoreinrichtung (21) ausgebildet ist, eine dynamische Raumform der Hängetransportelemente (23, 23a-23e) zu erkennen, und/oder wobei eine dynamische Raumform der Hängetransportelemente von der Steuerungseinheit (39) oder Rechnereinrichtung (37) berechnet wird.

10. Abstandsoptimierungsvorrichtung nach einem der vorgenannten Ansprüche, wobei die mindestens eine Sensoreinrichtung (21) als mindestens eine Kamera und/oder mindestens ein Lasersensor und/oder mindestens ein Ultraschallsensor ausgeführt ist, und optional eine zweite Rechnereinrichtung (38) umfasst.

11. Verfahren zur Förderung von Hängetransportelementen (23, 23a-23e), insbesondere eines Hängeförderers (22), optional mit mindestens einer Abstandsoptimierungsvorrichtung (20, 20a-20e) nach einem der vorhergehenden Ansprüche, umfassend mindestens die Verfahrensschritte:

  - Erfassen mindestens eines Abstands zwischen benachbarten Hängetransportelementen (23, 23a-23e) und/oder Förderelementen (45),
  - Optimierung des mindestens einen Abstands zwischen den benachbarten Hängetransportelementen (23, 23a-23e) mittels mindestens eines Abstandanpassungselements (27)

12. Verfahren nach Anspruch 11, wobei eine Geschwindigkeit mindestens eines Hängetransportelements (23, 23a-23e) entlang einer Förderrichtung (33) des Hängeförderers (22) mittels des mindestens einem Abstandanpassungselements (27) verändert wird.

13. Verfahren nach Anspruch 11 oder 12, wobei eine Geschwindigkeit mindestens eines Hängetransportelements (23, 23a-23e) entlang der Förderrichtung (33) des Hängeförderers (22) durch mindestens eine Steuerungseinheit (39) gesteuert wird, und optional die mindestens eine Steuerungseinheit (39) die Geschwindigkeit mindestens eines Hängetransportelements (23, 23a-23e) des Hängeförderers (22) und/oder die Trajektorie (41) des Hängeförderers und/oder mindestens einen Abstand, insbesondere das Lichtmassminimum (40, 40a-40d), zwischen benachbarten Hängetransportelementen (23, 23a-23e) berücksichtigt.

14. Verfahren nach einem der Ansprüche 11 bis 13, wobei mindestens ein erfasster Abstand mit einem Sicherheitsfaktor angepasst wird.

15. Verfahren nach einem der Ansprüche 11 bis 14, wobei mindestens eine Sensoreirichtung (21) vorhanden ist, und wobei optional die Sensoreirichtung eine dynamische Raumform der Hängetransportelemente (23, 23a-23e) erkennt, und/oder die dynamische Raumform der Hängetransportelemente (23, 23a-23e) von der Steuerungseinheit (39) oder einer ersten Rechnereinrichtung (37) berechnet wird.

16. Hängefördersystem (36) umfassend mindestens eine Abstandsoptimierungsvorrichtung (20, 20a-20e) nach einem der Ansprüche 1 bis 10, wobei die mindestens eine Abstandsoptimierungsvorrichtung (20, 20a-20e) nach einer Beladestation (26, 26a-26d) entlang mindestens einer Trajektorie (41) angeordnet ist.

17. Hängefördersystem nach Anspruch 16, wobei Betriebsparameter des Hängefördersystems (36) an eine KI-Einheit (50) gesendet werden, die insbesondere dazu ausgebildet ist, Förderleistung und Wartung des Hängefördersystems (36) zu optimieren.

Fig. 1

# Fig. 2

Fig. 3

Fig. 4

Fig. 5

Fig. 6

Fig. 7

Fig. 8

Fig. 9

F

22

23

Fig. 10

28

F

22

Fig. 11

28

23

Europäisches
Patentamt

European
Patent Office

Office européen
des brevets

**EUROPÄISCHER RECHERCHENBERICHT**

**Nummer der Anmeldung**

EP 24 15 4861

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 800 146 A1 (DUERKOPP FOERDERTECHNIK GMBH [DE]) 7. April 2021 (2021-04-07) * Absätze [0006], [0018], [0037], [0051], [0052], [0061]; Abbildungen 1, 2 * | 1-5,7-17 | INV. B65G17/20 B65G19/02 |
| | ----- | | |
| X | JP H05 42074 U (-) 8. Juni 1993 (1993-06-08) * Absätze [0007], [0008], [0010] - [0017]; Abbildungen 1-3 * | 1-3, 5-10, 12-17 | |
| | ----- | | |
| A | US 2019/291968 A1 (GALLATI RUDOLF [CH] ET AL) 26. September 2019 (2019-09-26) * Absatz [0081]; Abbildung 3 * | 7,8 | |
| | ----- | | |
| | | | **RECHERCHIERTE SACHGEBIETE (IPC)** B65G |

Der vorliegende Recherchenbericht wurde für alle Patentansprüche erstellt

| Recherchenort | Abschlußdatum der Recherche | Prüfer |
|---|---|---|
| München | 22. Mai 2024 | Waldstein, Martin |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument
............................................................................................
& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 15 4861

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-05-2024

| Im Recherchenbericht angeführtes Patentdokument | Datum der Veröffentlichung | Mitglied(er) der Patentfamilie | Datum der Veröffentlichung |
|---|---|---|---|
| EP 3800146 A1 | 07-04-2021 | DE 102019215304 B3 | 13-08-2020 |
| | | DE 102020214613 A1 | 16-12-2021 |
| | | EP 3800146 A1 | 07-04-2021 |
| | | EP 4001180 A1 | 25-05-2022 |
| | | ES 2928628 T3 | 21-11-2022 |
| | | US 2021101756 A1 | 08-04-2021 |
| | | US 2022153533 A1 | 19-05-2022 |
| JP H0542074 U | 08-06-1993 | JP 2523305 Y2 | 22-01-1997 |
| | | JP H0542074 U | 08-06-1993 |
| US 2019291968 A1 | 26-09-2019 | CH 714814 A1 | 30-09-2019 |
| | | EP 3543181 A1 | 25-09-2019 |
| | | US 2019291968 A1 | 26-09-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3543181 A1
- DE 102019215304 B3
- EP 2899144 A1
- CH 714004 A1
- JP H0542074 U